# EUROPEAN PATENT APPLICATION

(11) **EP 2 574 237 A1**
(43) Date of publication of application: **03.04.2013**
(21) Application number: 11007968.8
(22) Date of filing: 30.09.2011
(51) Int. Cl.: A01N 57/12, A01N 57/16, A01P 1/00

(54) **Use of a lipoteichoic acid, mono- or polyglycerophosphate for antibacterial pre-treatment and especially in medical devices**

(71) Applicant: Lunamed AG, 7000 Chur (CH)
(72) Inventor: Truog, Peter, 7000 Chur (CH); Buschmann, Helmut, H., 52076 Aachen (Walheim) (DE)
(74) Representative: Peters, Hajo

(57) **Abstract**

The present invention refers to the use of a glycerophosphate derivative like lipoteichoic acid or mono- or polyglycerophosphate in antibacterial treatment of a surface or in antibacterially covering a surface, an antibacterial preparation preventing bacterial adhesion, a bacterially challenged surface or a medical device comprising at least one such lipoteichoic acid or mono- or polyglycerophosphate or its use in blocking adhesion sites of gram-positive bacteria.

## Description

### Field of the invention

The present invention refers to the use of a glycerophosphate derivative like lipoteichoic acid or mono- or polyglycerophosphate in antibacterial treatment of a surface or in antibacterially covering a surface, an antibacterial preparation preventing bacterial adhesion, a bacterially challenged surface or a medical device comprising at least one such lipoteichoic acid or mono- or polyglycerophosphate or its use in blocking adhesion sites of gram-positive bacteria.

### Background of the invention

Microorganisms and especially bacteria are a constant threat to animal and human health. Bacteria, including especially gram-positive bacteria adhere themselves to many surfaces increasing thus the risk of infections if the body of an animal or human comes into contact with these bacteria, either outside, on or inside the body. These surfaces to which adherence of (gram-positive) bacteria might proof harmful, range from surfaces of day-to-day articles like a water-hosing for drinking water, shower or bath or wound covers (like band-aids), to surfaces of a body like teeth etc., to surfaces on devices like medical devices, especially implants. Especially for the latter it is very often of utmost importance that these devices/implants remain sterile and will not be covered by any (gram-positive) bacteria before being brought in contact or even entered into the body of an animal or human.

The applicant has now found-out that treatment of a surface with a glycerophosphate derivative like lipoteichoic acid or mono- or polyglycerophosphate does prevent adherence of (gram-postive) bacteria to this surfaces. The glycerophosphate derivative like lipoteichoic acid or mono- or polyglycerophosphate adheres itself to the surface, thus blocking the adherence of the (gram-positive) bacteria and thus allowing a preventive antibacterial treatment of such a surface. The mechanism involved seems to be based on a competitive inhibition between the glycerophosphate derivative and the (gram-positive) bacteria and these glycerphosphate derivatives are providing a competitive inhibition effect against the adhesion of gram-positive bacteria even though some are just small molecular structures. Accordingly, it was the object of the current invention to provide new modes of preventive antibacterial treatment of a surface, blocking and reducing bacterial adhesion (especially from gram-positive bacteria), especially for surfaces that will come into contact with the body of an animal or human.

Thus, the present invention relates to the use of a glycerophosphate derivative according to general formula I 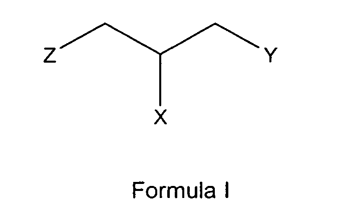 wherein
one of X and Y is R¹ while the other is 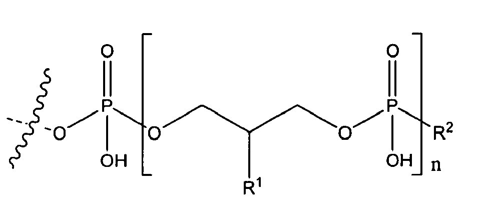 and Z is either OH or O-PO(OH)₂,
n is either 0, 0 to 11 or has a mean value of 9 (or a value of 8 to 40);
and
if n is 0, R¹ and R² are OH;
if n is 0 to 11, X is R¹, R¹ is either H, OH or OMe or OEt and R² is OH or -O-CH₂-CH(R¹)-CH₂-OH;
if n has a (mean) value of 8 to 40, or a mean value of 9, R¹ is either OH or O-D-Alanyl and R² is
either 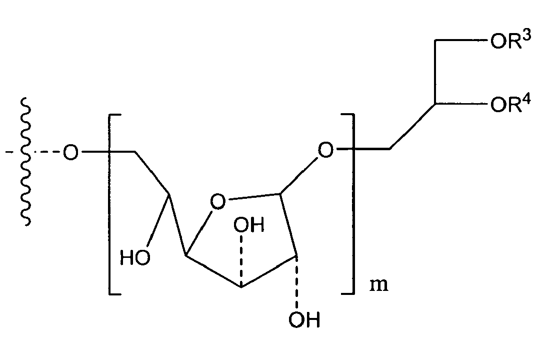 or its tautomeric equivalent 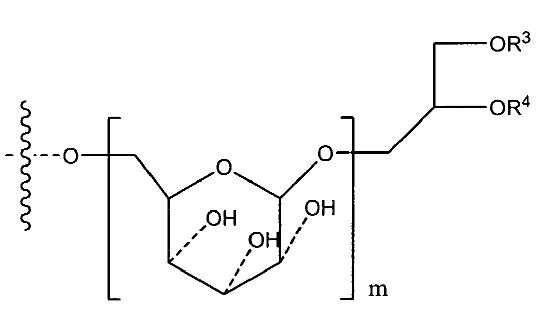 with R³ and R⁴ independently from one another being residues of saturated or unsaturated, unsubstituted fatty acids with 10 to 20 carbon atoms; and m being selected from 1 to 3,
with the compounds of formula I being present either in free form or as physiologically acceptable salt; in form of any of their structural isomers including mixtures thereof, preferably in pure enantiomeric or diastereomeric form or any mixture thereof including racemic mixtures;
in the antibacterial treatment of a surface.

The present invention also relates to the use of lipoteichoic acids and other glycerophosphate derivatives according to general formula I-A; 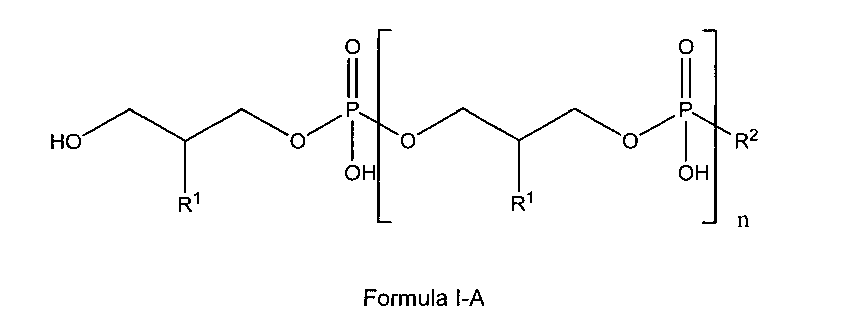 wherein
n is either 0, 1 to 11 or has a mean value of 9 (or a value of 8 to 40);
and
if n is 0, R¹ and R² are OH;
if n is 1 to 11, R¹ is either H, OH or OMe or OEt and R² is OH or -O-CH₂-CH(R¹)-CH₂-OH;
if n has a (mean) value of 8 to 40, or a mean value of 9, R¹ is either OH or O-D-Alanyl and R² is
either 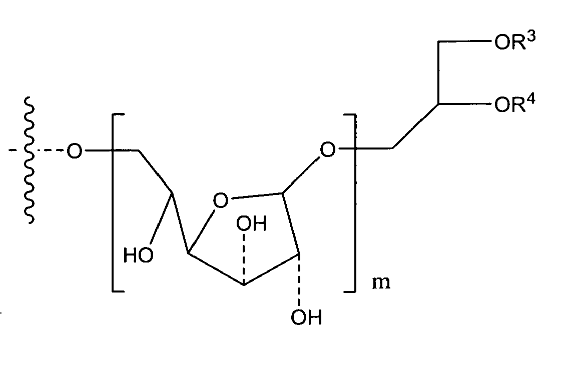 or its tautomeric equivalent 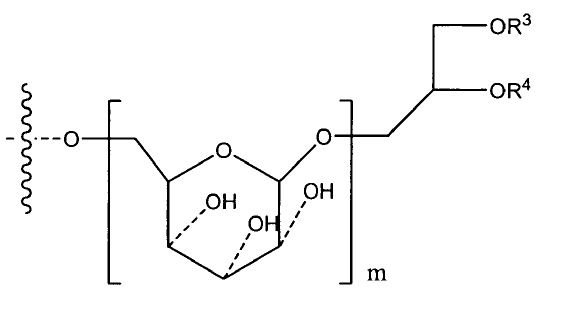 with R³ and R⁴ independently from one another being residues of saturated or unsaturated, unsubstituted fatty acids with 10 to 20 carbon atoms; and m being selected from 1 to 3,
with the compounds of formula I-A being present either in free form or as physiologically acceptable salt; in form of any of their structural isomers including mixtures thereof, preferably in pure enantiomeric or diastereomeric form or any mixture thereof including racemic mixtures;
in the antibacterial treatment of a surface.

Such surfaces to which adherence of (gram-positive) bacteria might proof harmful range from surfaces of day-to-day articles like a water-hosing for drinking water, shower or bath or wound dressings (like bandages or adhesive bandages), to surfaces of a body like teeth etc., up to surfaces on or being part of devices like medical devices, especially implants.

The compounds as described by general formula I-A or also by general formula I and its defined derivatives are defined in this invention as "glycerophosphate derivatives of the invention" or as "glycerophosphate derivatives used according to the invention". Preferably by "used according to the invention" it is meant the use in the antibacterial treatment of a surface but also regarding later further related aspects of the invention (disclosed below). These include the use for blocking the adhesion of at least one species of bacteria to a surface, or the use for establishing of an antibacterial cover of a surface as well as uses in which the glycerophosphate derivative is comprised in a bacterially challenged surface, a preparation for the prevention of bacterial adhesion or in a medical device like an implant.

"Antibacterial treatment" is defined herein as the treatment of a surface with a chemical compound, a "glycerophosphate derivative of the invention" or a "glycerophosphate derivative used according to the invention" - to either reduce the number of bacteria already on a surface or - in the preferred mode of this invention - to prevent the adherence of bacteria (or reduce the number of (gram-positive) bacteria able to adhere) to a surface by a "(pre)"-treatment of the surface with the glycerophosphate derivative. The later is also defined as "preventive antibacterial treatment" and the "antibacterial treatment" is preferably a "preventive antibacterial treatment". In both modes the effect that the glycerophosphate derivatives block (and/or compete with the bacteria for) the adhesion sites of (gram-positive) bacteria is used.

"Preventive antibacterial treatment" is defined herein as the treatment of a surface with a chemical compound, - here a "glycerophosphate derivative of the invention" or a "glycerophosphate derivative used according to the invention" - to prevent the adherence/adhesion of bacteria (or reduce the number of (gram-positive) bacteria able to adhere) to a surface by a "(pre)"-treatment of the surface with the glycerophosphate derivative.

"Surface" is defined herein in general as any surfaces to which (gram-positive) bacteria might adhere themselves. This invention is primarily focused on surfaces that will or might come into contact with the body of an animal or human. These surfaces range from surfaces of day-to-day articles like a water-hosing for drinking water, shower or bath or wound covers (like band-aids), to surfaces of a body like teeth etc., to surfaces on or being part of devices like medical devices, especially implants. In case such a surface is part of a device like a medical device, it might be made of any fitting material but is/are preferably made of biomedical material such as selected polymers, titanium, silicone or apatite.

"Medical device" is defined herein (also for all further related aspects of the invention disclosed below) in general as any device which has a medical use. Specifically it is meant to be a device for medical use that is prepared to be brought into contact with the body of an animal or human, preferably of a medical device being a device prepared to be introduced by any artificial or natural body-opening into the body of an animal or human. Most preferably, this medical device is an implant. In focus of the invention this medical device comprises a "surface" as defined above, preferably a "surface" that - e.g. in an implant - comes into contact with (a part of) the body of an animal or human.

"Implant" is defined herein (also for all further related aspects of the invention disclosed below) as a medical device designed for replacing or strengthening a missing or impaired biological structure. Implants have at least one surface that contact the (or part of the) body. In the context of this invention at least one of these surfaces preferably is a "surface" as defined above. Such surfaces might be made of any fitting material but is/are preferably made of biomedical material such as selected polymers, titanium, silicone or apatite. Some implants contain electronics while others are bioactive. Implants include electrically powered implants, bio implants, dental implants, and orthopedic implants as well as any Brain implant, Breast implant, Buttock implant, Cochlear implant, Contraceptive implant, Dental implant, Mini dental implant, Extraocular implant, Microchip implant, Retinal implant, Subdermal implant or Transdermal implant.

In some embodiments according to the invention (including later further related aspects of the invention disclosed below) a use does not encompass:
- a use in the prophylaxis of *caries dentium,* especially not the use being the prophylaxis against *caries dentium* achieved by prevention of plaque/biofilm formation and/or wherein the use is done in form of an oral or dental hygiene product including a toothpaste, a toothgel, a cream or a rinsing fluid;
- a use in the prevention of formation of dental plaque; or
- a use in the treatment of or prophylaxis against an inflammatory process caused by an infection, of or against an infection or of or against an infectious process in the *cavitas oris.*

In some embodiments according to the invention (especially including later further related aspects of the invention disclosed below)
- an oral or dental hygiene product (including a toothpaste, a toothgel, a cream or a rinsing fluid), or
- a "dental treatment composition"
is excluded from the scope of this invention.

"Oral or dental hygiene product" is defined in this invention as any hygiene product used in the oral cavity and especially on the teeth for a hygienic effect. Examples include a toothpaste, a toothgel, a cream or a rinsing fluid (mouth wash). All of these products are either used for treating a already occurred disorder like bad breath, dental caries, (marginal) periodontal diseases, inflammation etc. or - most often as prophylaxis - to prevent such an event (like establishing dental caries) from happening.

"Dental treatment composition" is defined in this invention as a composition of matter to be used in the treatment of the teeth. Examples in which this composition may be included include a toothpaste, a toothgel, a cream or a rinsing fluid (mouth wash). The dental treatment composition may either be used for treating a already occurred disorder like established dental caries or periodontal diseases or - most often - as prophylaxis to prevent such an event (like establishing dental caries) from happening.

In one preferred embodiment the glycerophosphate derivative according to Formula I used according to the invention is a compound of Formula I-A

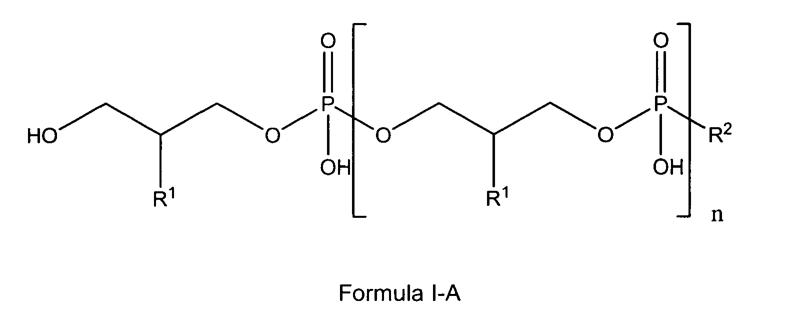

In another preferred embodiment the glycerophosphate derivative according to Formula I used according to the invention is a compound of Formula I-B

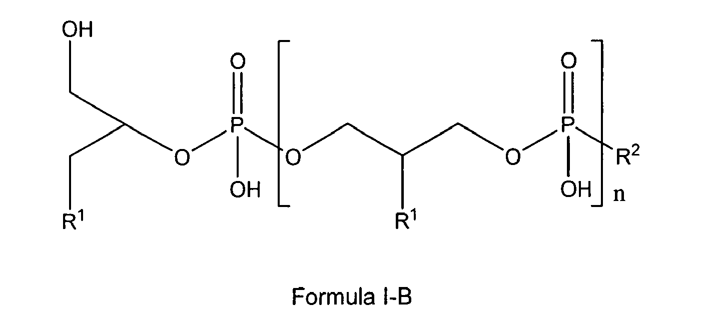

In another preferred embodiment the glycerophosphate derivative according to Formula I used according to the invention is a compound of Formula I-C

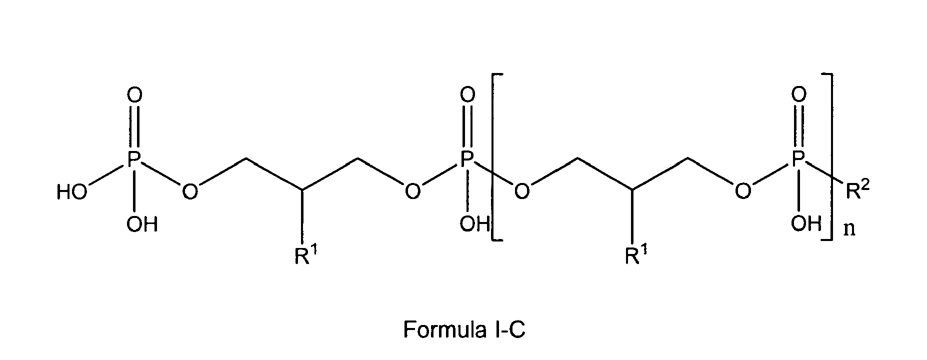

In another preferred embodiment the glycerophosphate derivative according to Formula I, wherein in the compound of formula I, n is 0, Z is OH and R¹ and R² are OH, is a glycerophosphate derivative according to one of the following formulas V-A or V-B: 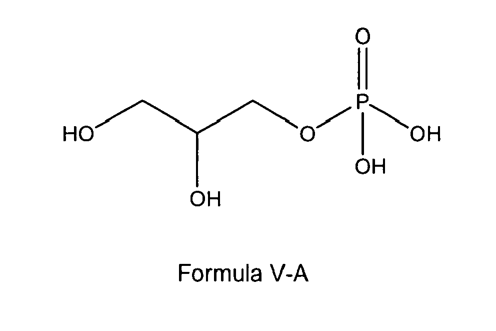 or

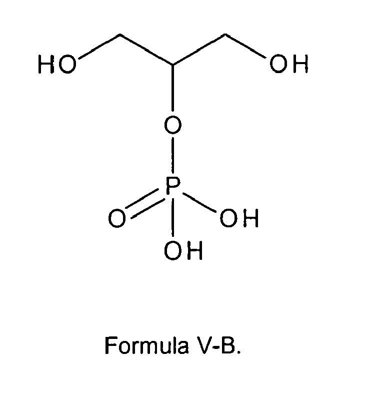

In one very preferred embodiment referring to a glycerol phosphate the glycerophosphate derivative used according to the invention is a compound of formula I or formula I-A being a glycerol phosphate derivative according to any of the following formulas V-A, V-Aa, V-Ab or V-Ac: 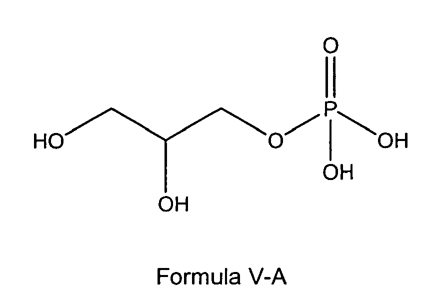 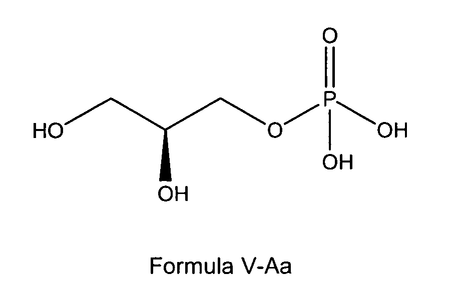 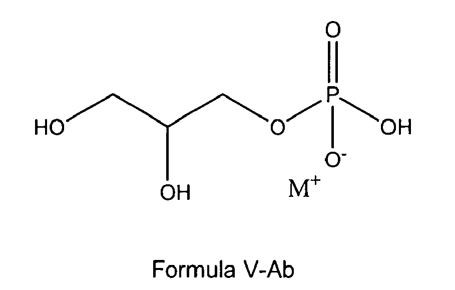 or 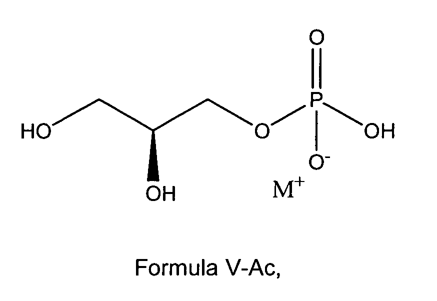 wherein M⁺ is selected from positively charged ions, such as alkali metal ions (also earth alkali metal ions) or positively charged primary, secondary, tertiary or quaternary ammonium ions, or M⁺ is a sodium ion or also two sodium ions. M⁺ here and also throughout this description is used as signifying not only a singly charged ion but may also be a multiple (double) charged ion such as an earth alkali ion like Ca²⁺ or also signifying more than one ion such as e.g. two sodium ions.

Preferably, the glycerophosphate derivative according to Formula I, wherein in the compound of formula I, n is 0, Z is OH and R¹ and R² are OH, is a glycerophosphate derivative according to any of the following formulas V-A, V-Aa, V-Ab or V-Ac being selected from free glycerol phosphate, sodium glycerol phosphate, potassium glycerol phosphate or magnesium glycerol phosphate,
most preferably is sodium glycerol phosphate (e.g. mono- or di-sodium salt) of formula V-Ab or V-Ac. It might preferably also be free glycerol phosphate of Formula V-A or also calcium glycerol phosphate of formula V-Aa.
In one other very preferred embodiment referring to a glycerol phosphate the glycerophosphate derivative used according to the invention is a compound of formula I or formula I-A being a glycerol phosphate derivative according to any of the following formulas V-B, or V-Ba: 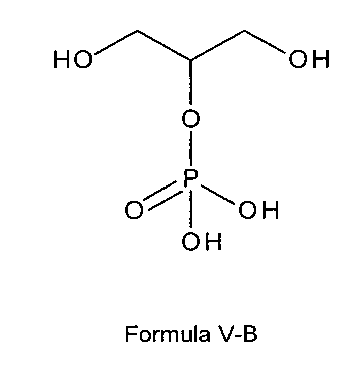 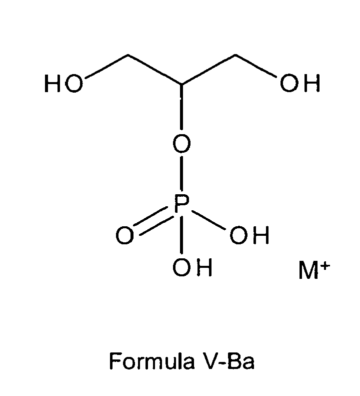 wherein M⁺ is selected from positively charged ions, such as alkali metal ions, earth alkali metal ions or positively charged primary, secondary, tertiary or quaternary ammonium ions, or M⁺ is one or two sodium ions;
preferably wherein the compound according to any of the following formulas V-B, or V-Ba is selected from free glycerol phosphate, sodium glycerol phosphate, potassium glycerol phosphate or magnesium glycerol phosphate,

most preferably is sodium glycerol phosphate (e.g. a mono- or di-sodium salt) of formula V-Ba. It might preferably also be free glycerol phosphate of formula V-B or also calcium glycerol phosphate of formula V-Ba.
In one other very preferred embodiment referring to a glycerol phosphate used according to the invention the glycerophosphate derivative used according to the invention is part of a combination of two such compounds with one glycerol-phosphate derivative - being part of the combination - being the glycerol phosphate 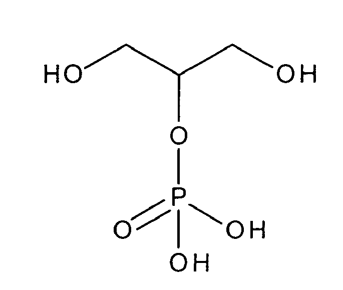 as a free acid or as a salt like a sodium (e.g. mono- or di-sodium salt) or calcium salt,
and
with the other glycerol-phosphate derivative - being another part of the combination - being the glycerol phosphate 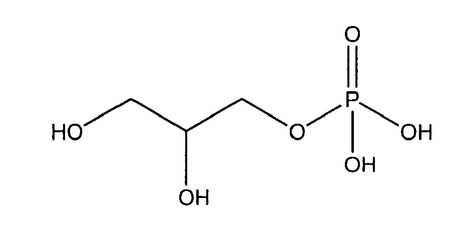 either as enantiomer or racemate or as a free acid or as a salt like a sodium (e.g. a mono- or di-sodium salt) or calcium salt.

Thus, one most preferred aspect "A" of the invention is the use of sodium glycerol phosphate (e.g. mono- or di-sodium salt) of formula V-Ba or of formula V-Ab or V-Ac in the antibacterial treatment of a surface.

Another most preferred aspect "B" of the invention is the use of glycerolphopshat of either formula V-A or V-B (or also as enantiomers and/or salts of formulas VAa, V-Ab, V-Ac, V-Ba) - preferably sodium glycerol phosphate (e.g. mono- or di-sodium salt) of formula V-Ba or of formula V-Ab or V-Ac - in the antibacterial treatment of a surface.

Another most preferred aspect "C" of the invention is the use of a combination of the glycerol phosphate 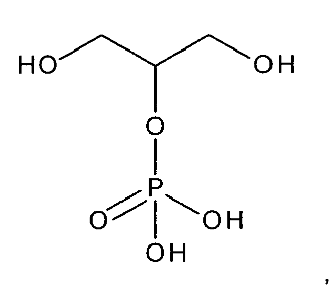 as a free acid or as a salt like a sodium (e.g. a mono- or di-sodium salt) or calcium salt,
with the glycerol phosphate 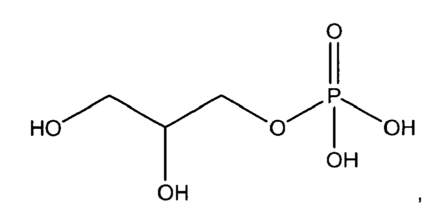 either as enantiomer or racemate or as a free acid or
as a salt like a sodium (e.g. mono- or di-sodium salt) or calcium salt
in the antibacterial treatment of a surface.

The compound/s as described by general formula V-A, V-Aa, V-Ab, V-Ac or V-B or V-Ba and their defined radicals above is/are defined in this invention as "glycerol phosphate/s of the invention" or "glycerol phosphate/s used according to the invention".

In one preferred embodiment referring to a polyglycerol phosphate the glycerophosphate derivative used according to the invention is a polyglycerol phosphate according to general formula I-A; 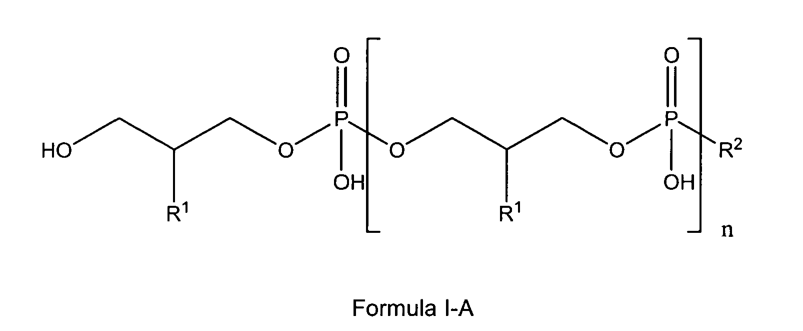 wherein
n is 1 to 11,
R¹ is either H, OH or OMe or OEt and
R² is OH or -O-CH₂-CH(R¹)-CH₂-OH;
with the compounds of formula I-A being present either in free form or as physiologically acceptable salt; in form of any of their structural isomers including mixtures thereof, preferably in pure enantiomeric or diastereomeric form or any mixture thereof including racemic mixtures. These compounds as well as those described by general formula II, IIa, IIb, IIc, IId or IIe and their defined radicals below are defined in this invention as "polyglycerol phosphate/s of the invention" or "polyglycerol phosphate/s used according to the invention".
In one preferred embodiment referring to a glycerophosphate derivative used according to the invention, the glycerophosphate derivative is a compound wherein in the glycerophosphate derivative of Formula I with Z being either OH or being O-PO(OH)₂, and n being 0 to 10, X is R¹, R¹ is either H, OH or OMe or OEt and R² is OH or -O-CH₂-CH(R¹)-CH₂-OH, thus being a polyglycerol phosphate according to general formula I-A or I-C; 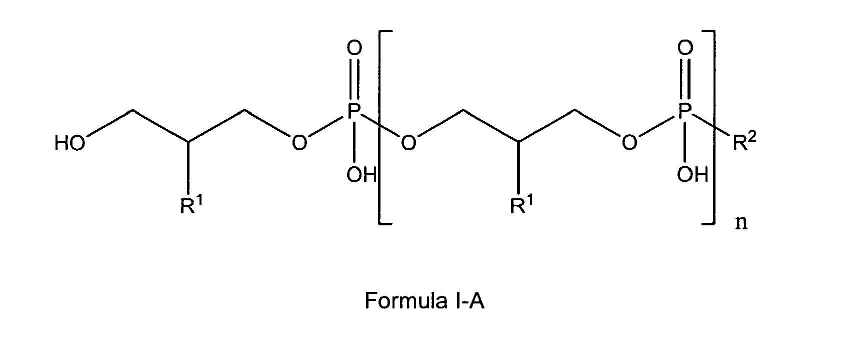 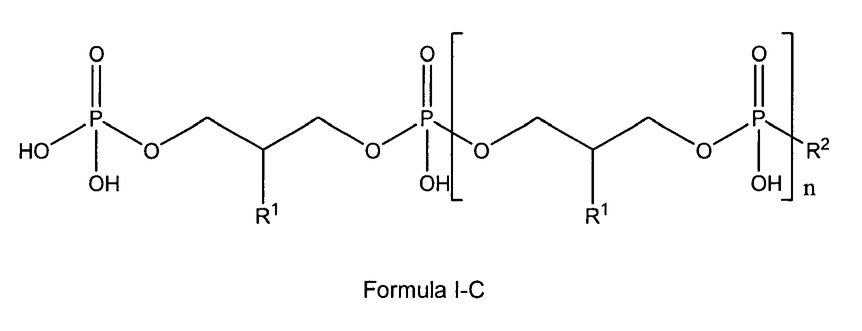 wherein
n is 0 to 11, preferably 1 to 11,
R¹ is either H, OH or OMe or OEt and
R² is OH or -O-CH₂-CH(R¹)-CH₂-OH;
with the compound of formula I, I-A or I-C being present either in free form or as physiologically acceptable salt; in form of any of their structural isomers including mixtures thereof, preferably in pure enantiomeric or diastereomeric form or any mixture thereof including racemic mixtures;
preferably with the compound of formula I, I-A or I-C being a compound according to any of general formulas II-A, II-A', II-B, II-B', II-C or II-C' 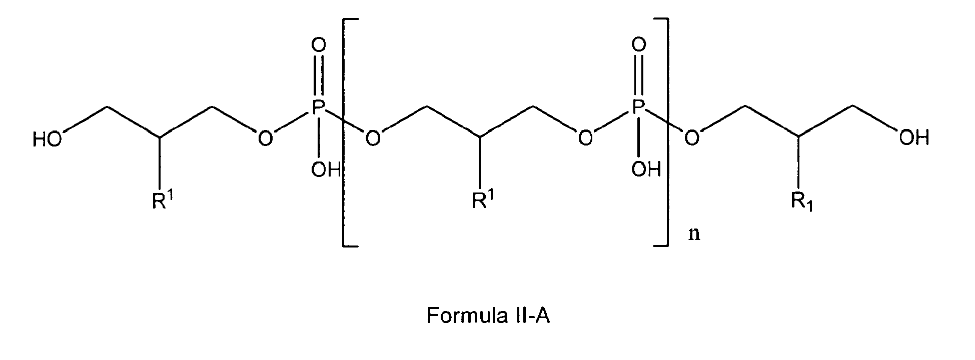 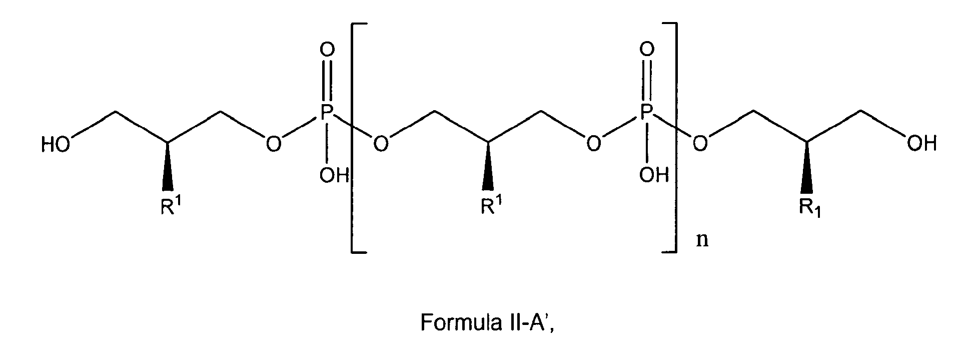 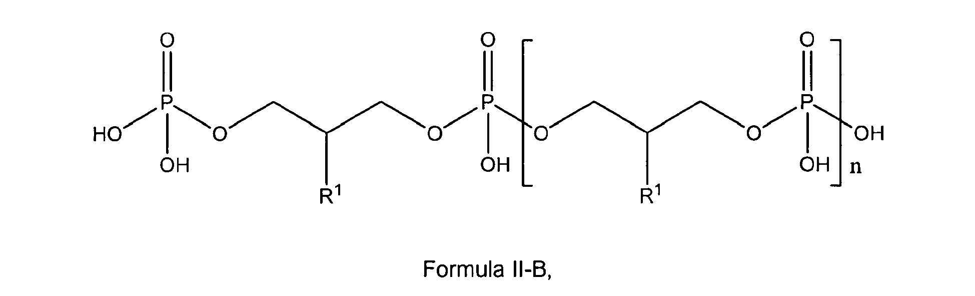 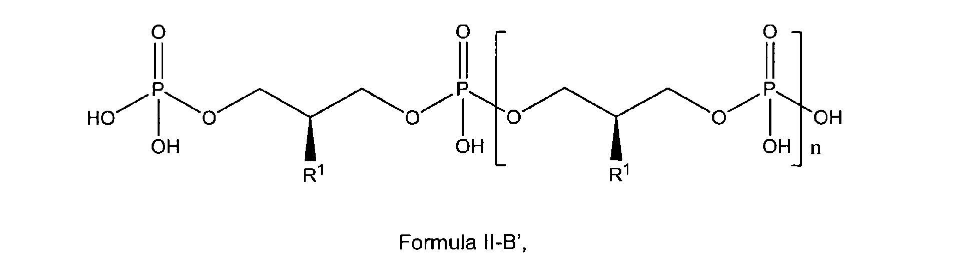 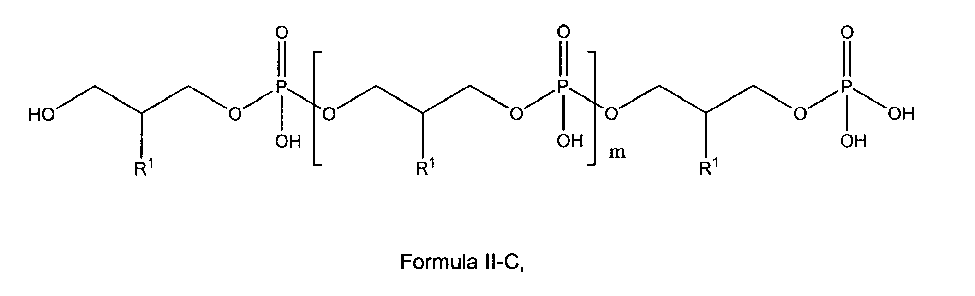 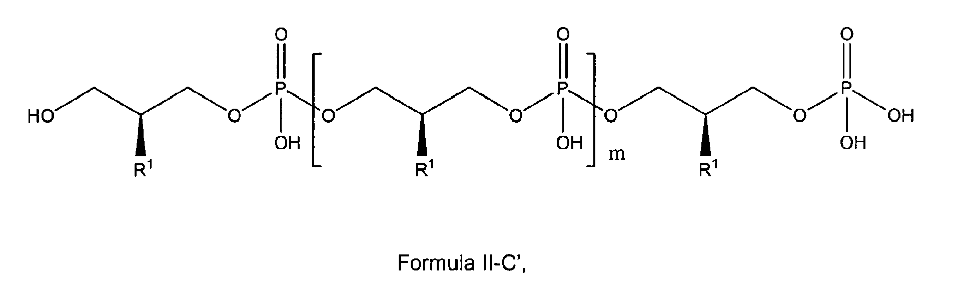 wherein
n is 0 to 10, or n is 1 to 10;
m is 0 to 9;
R¹ is either H, OH or OMe or OEt, or R¹ is OH;
with the compound of formula I, I-A or I-C being present either in free form or as physiologically acceptable salt such as salts with an alkali metal, earth alkali metal or positively charged primary, secondary, tertiary or quaternary ammonium ions, preferably a sodium salt (e.g. mono- or di-sodium salt).

In a preferred embodiment referring to a polyglycerol phosphate of the invention the glycerophosphate derivative used according to the invention is a polyglycerol phosphate according to any of general formulas II-A, II-Aa, II-A', II-A'a, II-A", or II-A"a 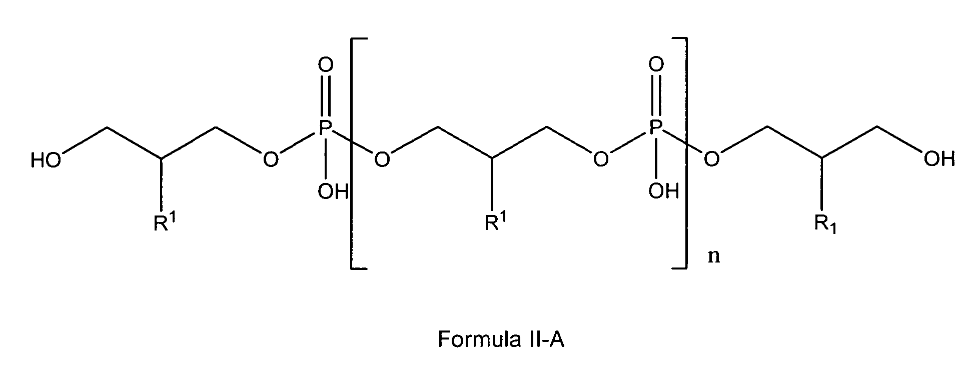 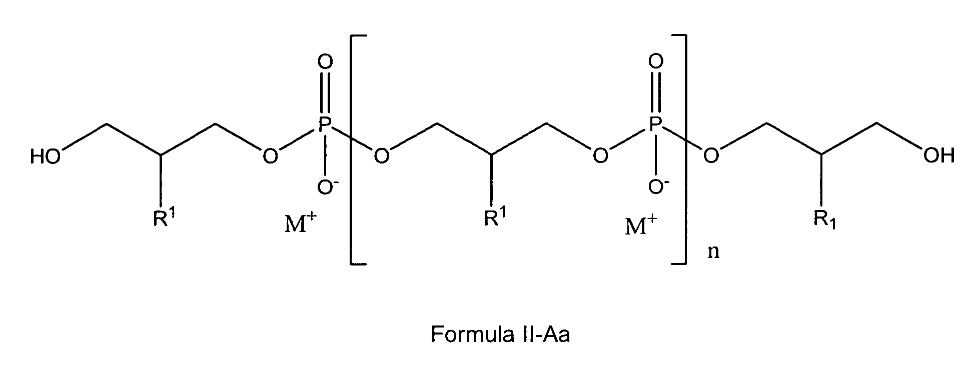 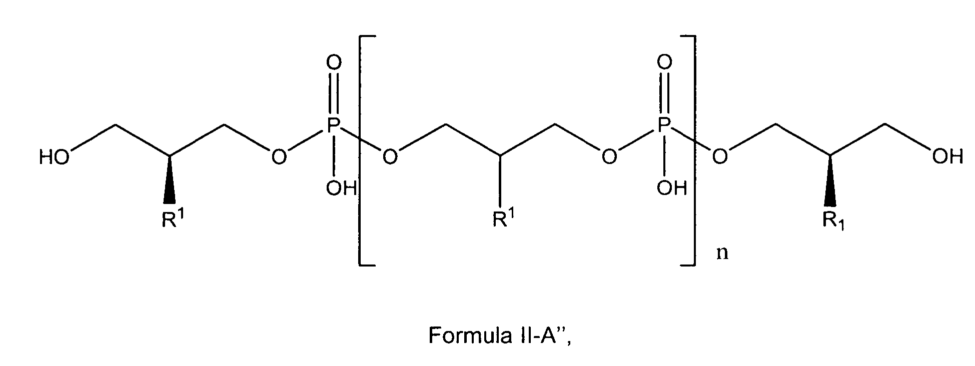 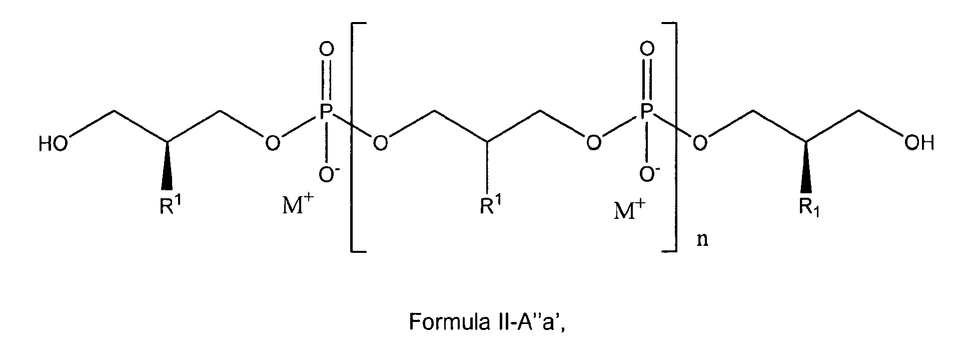 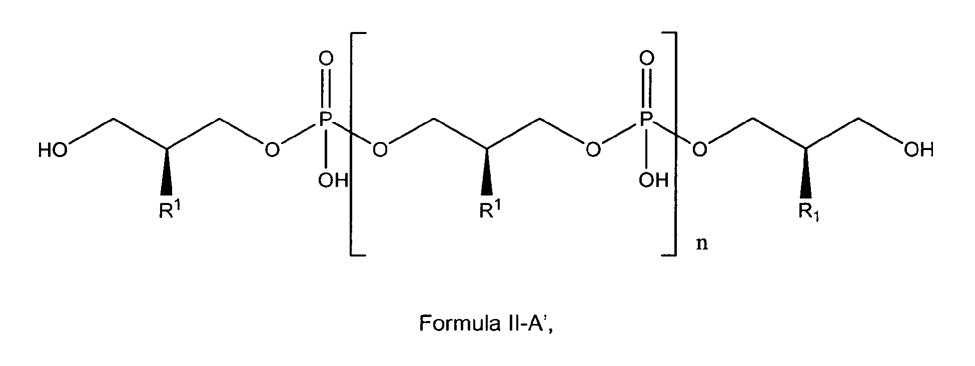 or 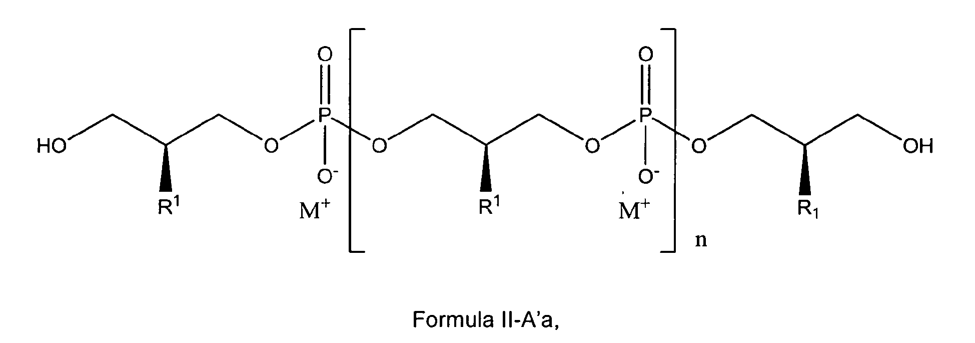 wherein
n is 0 to 10, or n is 1 to 10;
R¹ is either H, OH or OMe or OEt, or R¹ is OH; and
M⁺ is selected from positively charged ions, such as alkali metal ions or positively charged primary, secondary, tertiary or quaternary ammonium ions, or M⁺ is a sodium ion or is two sodium ions.

In a preferred embodiment referring to a polyglycerol phosphate of the invention the glycerophosphate derivative used according to the invention is a polyglycerol phosphate according to general formula II-A' 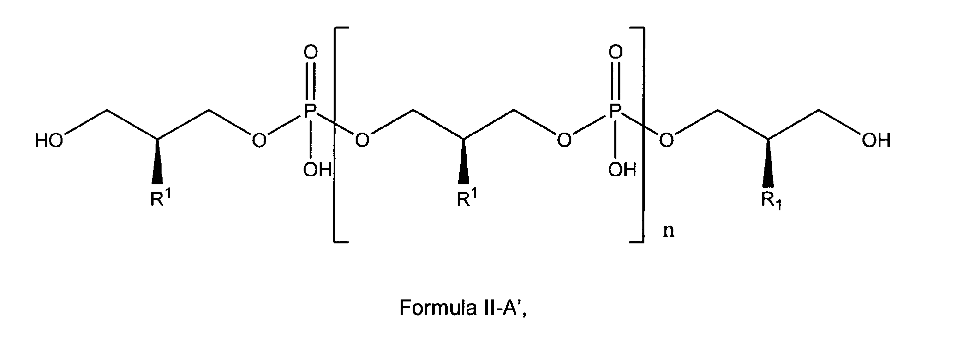 wherein
n is 3; and
R¹ is OH;
either in free form or as physiologically acceptable salt.
This compound is defined as ,,PGP1" hereinafter.

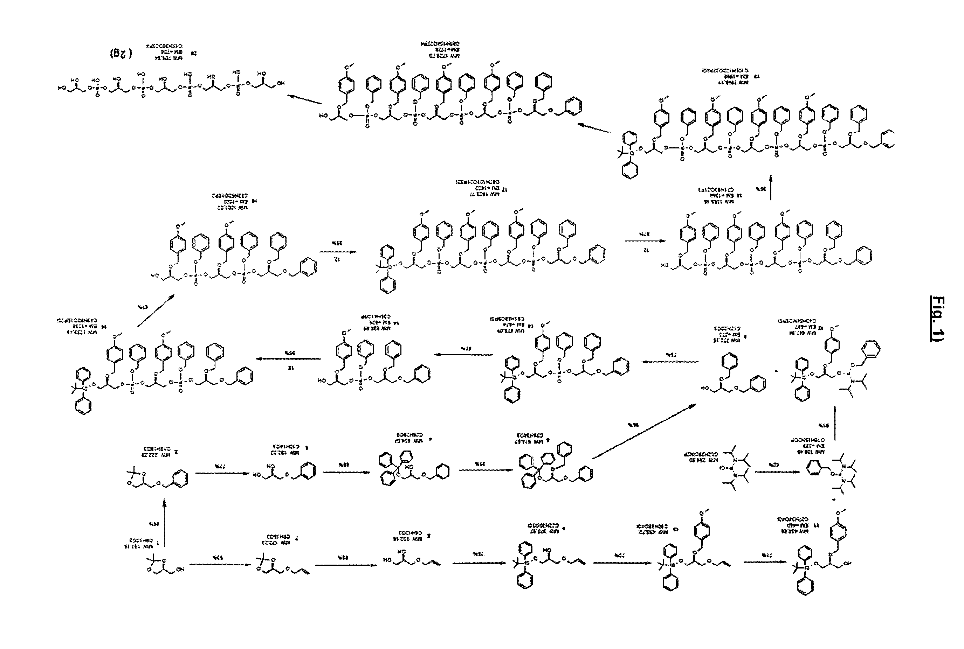

The compound can be synthesized according to the PhD-thesis of A. Stadelmaier (2003) at the University of Konstanz and the general synthetic principle is also described in Stadelmaier et al, "Synthesis of the First Fully Active Lipoteichoic Acid", Angew. Chem. International Edition (2003); 42 (8), p. 916-920. The scheme is included as figure 1. In principle, all of the polyglycerophophates described above and below may be synthesized according to that approach or are described in literature.

In a preferred embodiment referring to a polyglycerol phosphate of the invention the glycerophosphate derivative according to formula I used according to the invention is a polyglycerol phosphate derivative according to formula II-A, II-B or II-C wherein the polyglycerol phosphate is a compound according to general formula II-A' 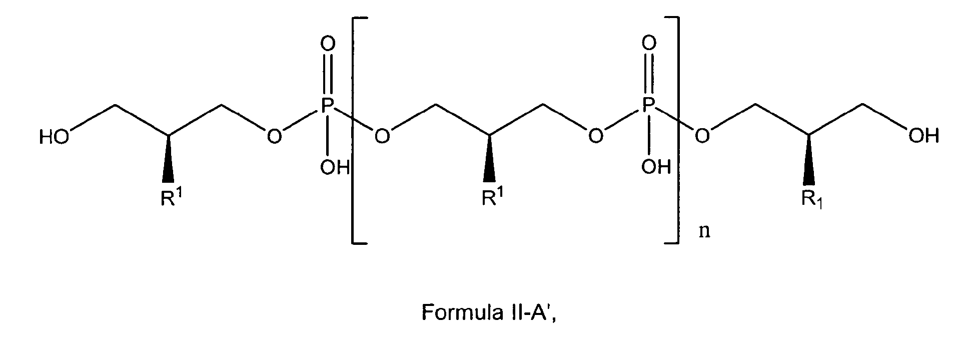 wherein
n is 3; and
R¹ is OH;
either in free form or as physiologically acceptable salt;
or is selected from 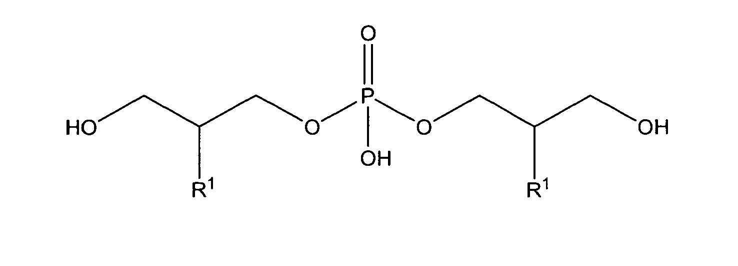 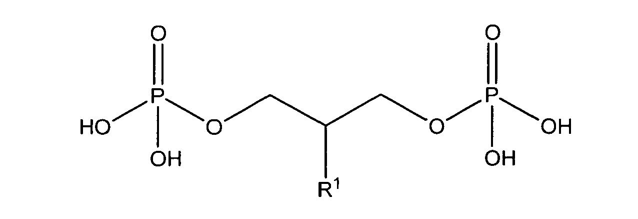 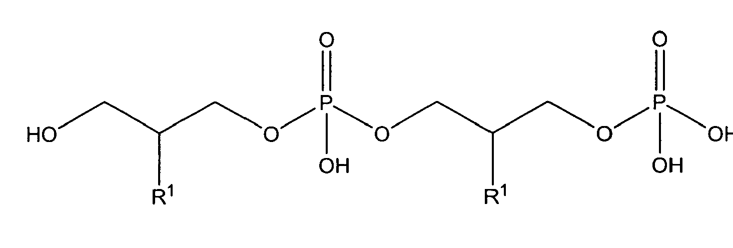 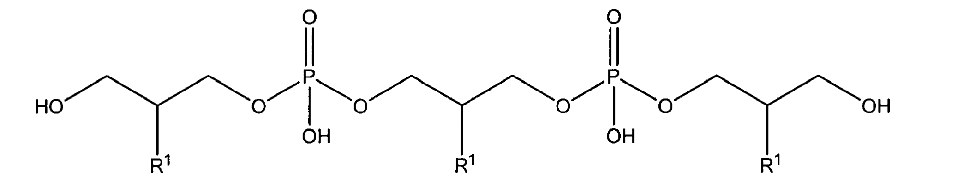 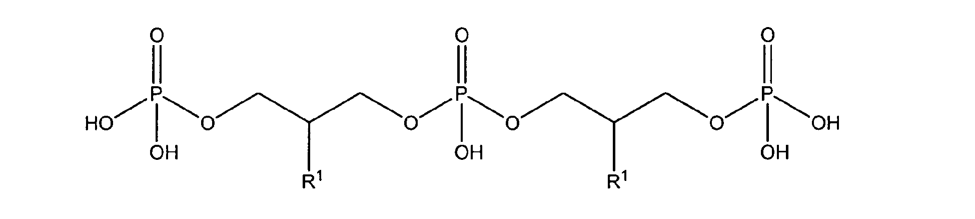 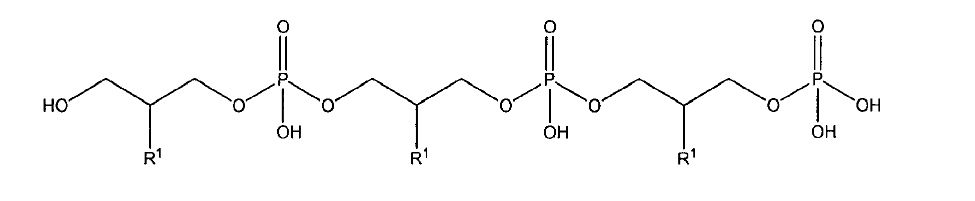 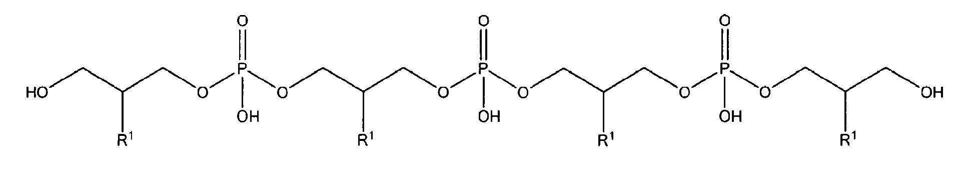 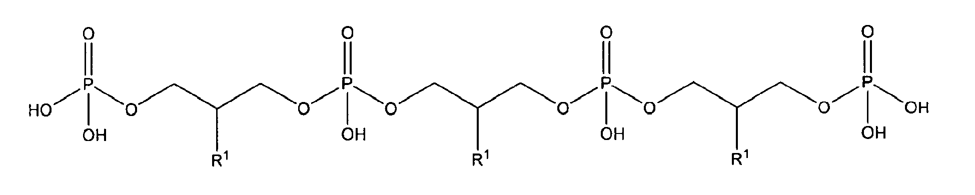 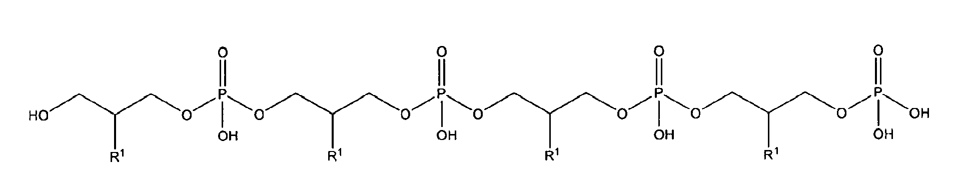 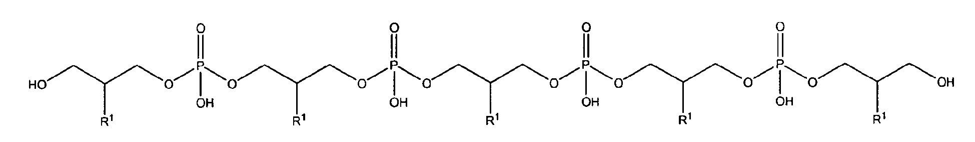 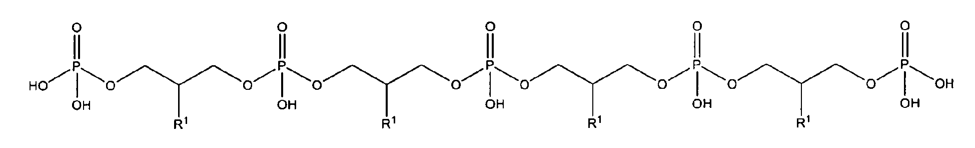 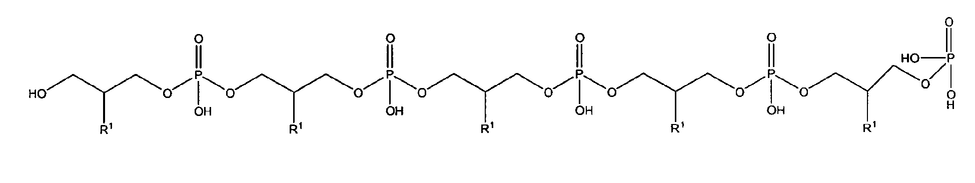 with R¹ being OH;
either in free form or as physiologically acceptable salt; in form of the racemate or as enantiomer;
or is selected from one of 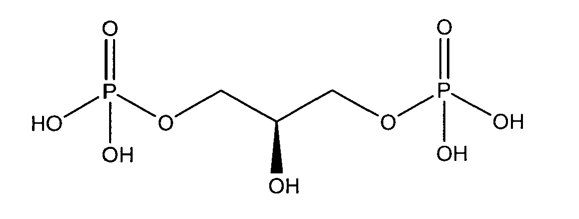 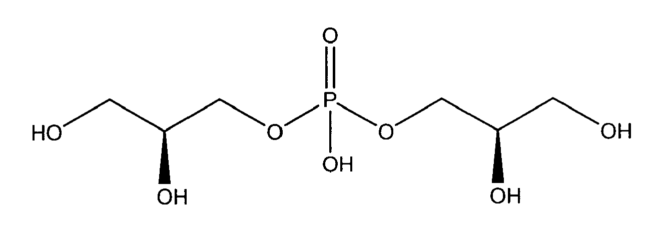 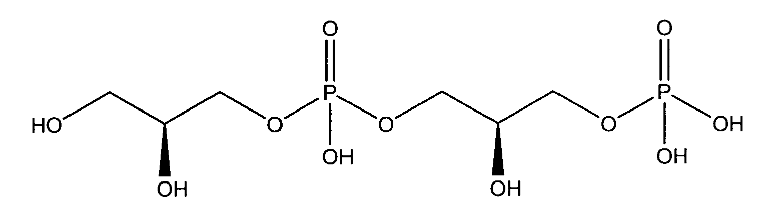 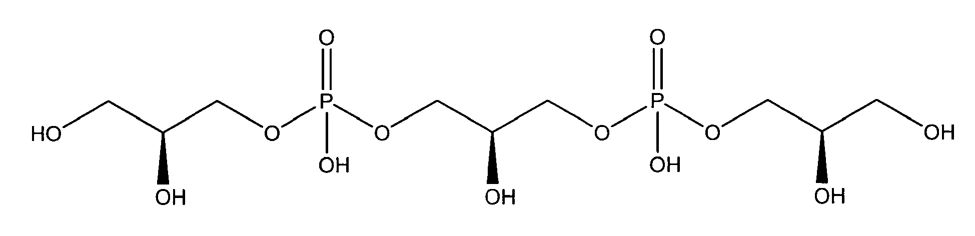 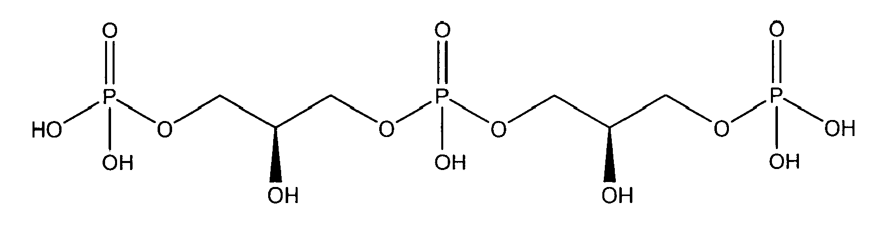 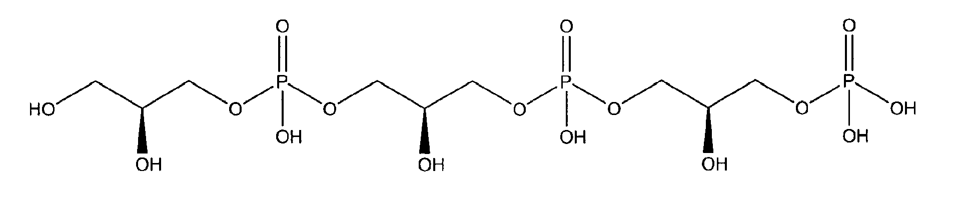 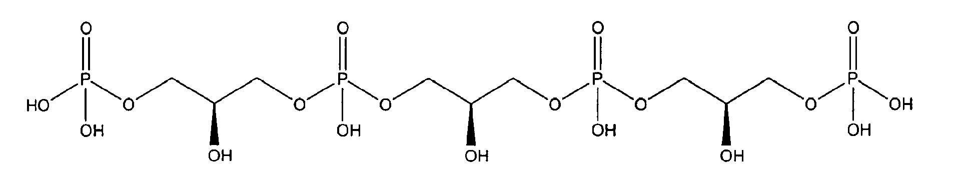 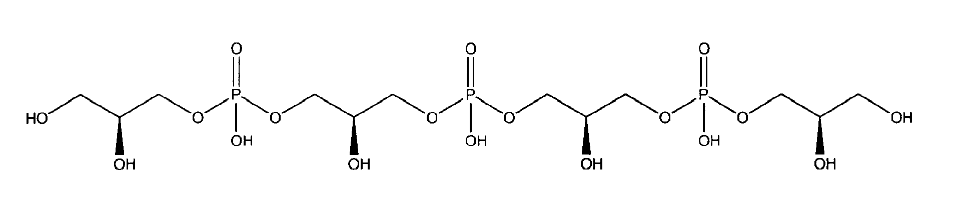 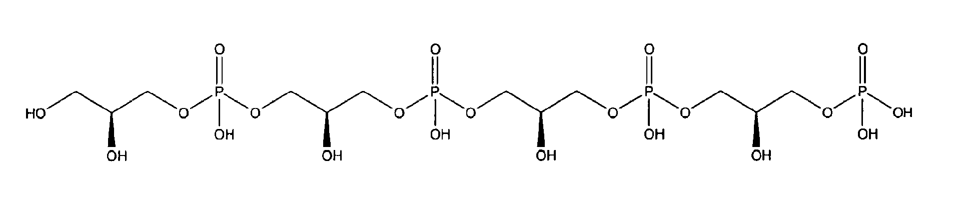 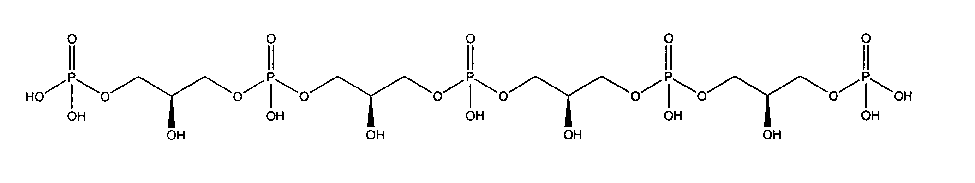 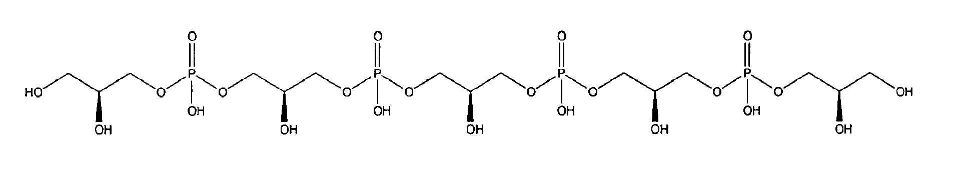 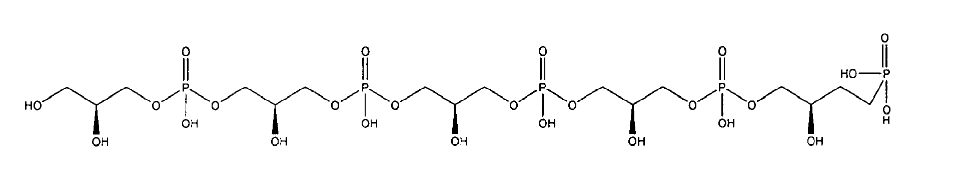 being present either in free form or as physiologically acceptable salt.

One further most preferred aspect "D" of the invention is the use of a polyglycerol phosphate of the invention according to formula II-A, II-B or II-C (or II-A', II-B' or II-C') as described above in the antibacterial treatment of a surface.

One aspect and embodiment of the invention refers to the use of a teichoic acid in the antibacterial treatment of a surface (or in other uses as described below in further related aspects of this invention). "Teichoic acids" as used herein is an inclusive term including the a) lipoteichoic acids (LTA) and b) the wall teichoic acids (WTA) form a major part of the cell wall of gram-positive bacteria.

A very preferred aspect and embodiment of the invention refers to the use of a (general) lipoteichoic acid in the antibacterial treatment of a surface (or in other uses as described below in further related aspects of this invention). There are many lipoteichoic acids known which form a major part of the cell wall of gram-positive bacteria.

The known lipoteichoic acids include synthetic, semisynthetic and naturally occurring lipoteichioic acids. A very broad introduction on the synthesis of as well as on synthetic lipoteichoic acids can be found in Pedersen, Christian Marcus; Schmidt, Richard R. (Edited by Moran, Anthony P), Microbial Glycobiology (2009), 455-476 with all lipoteichoic acids described therein herewith included by reference n this application as examples of the lipoteichoic acids to be used.. A further overview of the lipoteichoic acids - divided in Types I to IV - can be found in Greenberg et al., Infect Immun. 1996 Aug;64(8):3318-25. All II lipoteichoic acids Type I, Type II, Type III and Type IV as well as all those described therein (like e.g. in tables 1 or 2) herewith included by reference in this application as examples of the lipoteichoic acids to be used.

The (general) lipoteichoic acids as defined in this application are comprising:
a) a linear, hydrophilic 1,3-connected glycero-phophate chain - optionally substituted with D-alanine or other molecules -,
b) the gylcerophosophate chain being covalently bound through a phosphodiester to
c) a glycolipid, preferably a glyceroglycolipid.

Lipoteichoic acids falling under this definition according to this invention are called "(general) lipoteichoic acids" already before and hereinafter.

The glycolipid acts as an anchor in the cell membrane. The glycolipids are by definition of the invention lipids of the membrane in which one or more mono- or oligosaccharids are bound via a glycosidic bond to a lipid molecule. The lipid molecule is consisting of fatty acids being bound by an ester bond to a glycerol or by an amid bond to a sphingosine.

Preferably the glycolipid is a glyceroglycolipid in which one or more mono- or oligosaccharids are bound via a glycosidic bond to a lipid molecule consisting of fatty acids being bound by an ester bond to the glycerol. Preferably the glyceroglycolipid comprises a diacylglycerol with two fatty acid chains of 10 to 20 carbon atoms each being bound by an ester bond to the glycerol. Preferably the fatty acid chains are linear or branched and non-substituted and/or have a length of 10 to 20 carbon atoms each, most preferably 12, 14, 16 or 18 carbon atoms.

Most (general) lipoteichoic acids would be covered by the general formula I-A and its substituents as described above and directly below and some preferred embodiments are described below, but some are unusual. These unusual include the lipoteichoic acid from *Streptococcus pneumoniae* (see below) whose synthesis was recently described by Pedersen et al., in Angew. Chem. (2010), 122, 1 - 7. 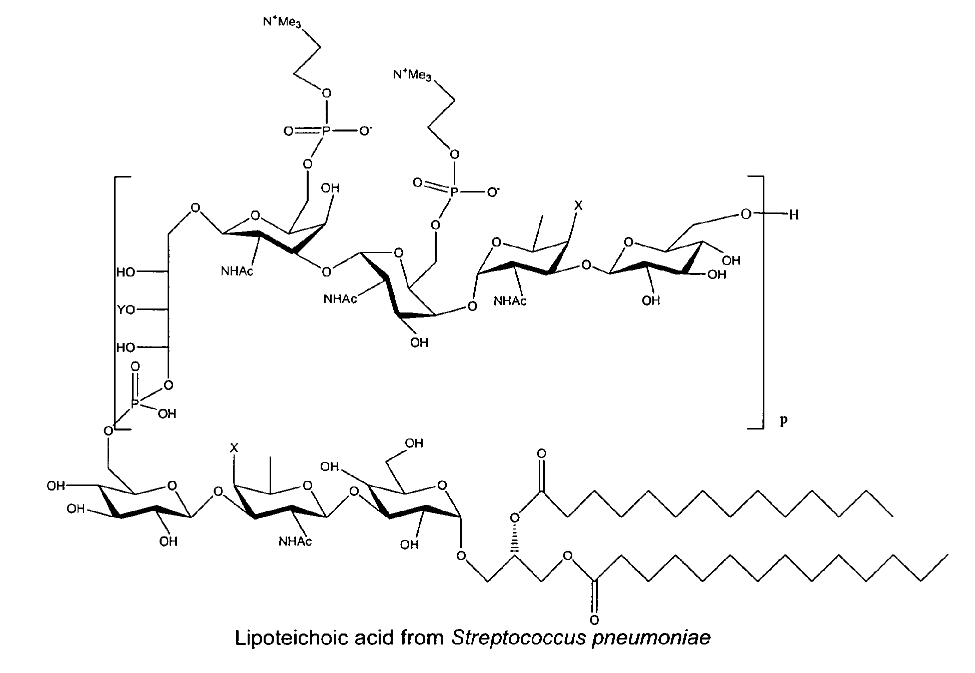 wherein
in one case X is NH₃⁺, or NHAc; Y is H, D-Ala, or α-GaINAc; and p is up to 8;
in the other case X is NH₃⁺; Y is H; and p is 1.

In one preferred embodiment of the invention (referring to a lipoteichoic acid) the glycerophosphate derivative used according to the invention is a lipoteichoic acid according to general formula I-A 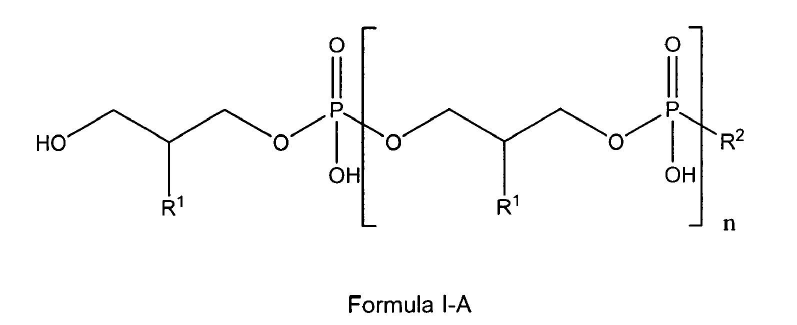 wherein
the mean value of n is 8 to 40,
R¹ is either OH or O-D-alanyl and
R² is
either 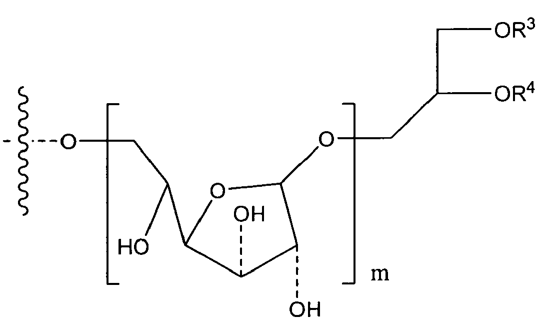 or its tautomeric equivalent 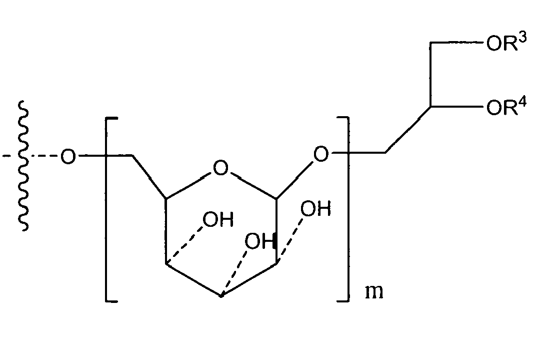 with R³ and R4 independently from one another being residues of saturated or unsaturated, unsubstituted fatty acids with 10 to 20 carbon atoms and m being selected from 1 to 3,
with the compounds of formula I-A being present either in free form or as physiologically acceptable salt; in form of any of their structural isomers including mixtures thereof, preferably in pure enantiomeric or diastereomeric form or any mixture thereof including racemic mixtures.

In one further even more preferred embodiment of the invention (referring to a lipoteichoic acid) the glycerophosphate derivative used according to the invention is a lipoteichoic acid according to general formula I-A 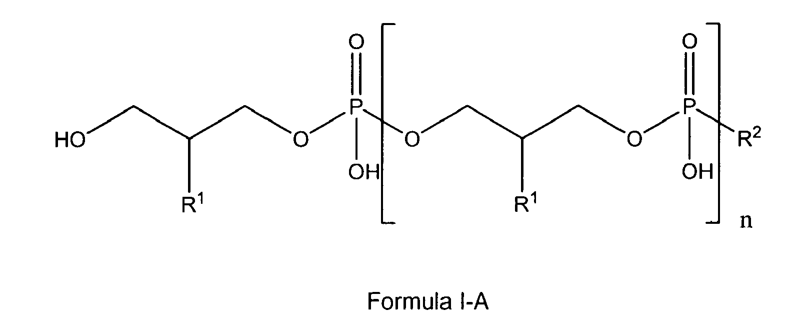 wherein
the mean value of n is 9,
R¹ is either OH or O-D-Alanyl and
R² is 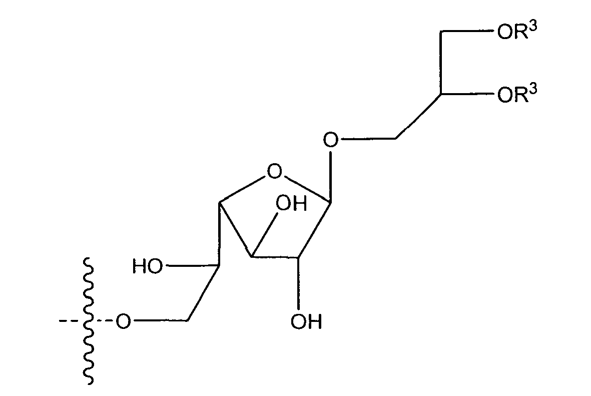 with R³ being residues of saturated or unsaturated fatty acids with 12, 14, 16 or 18 carbon atoms,
with the compounds of formula I-A being present either in free form or as physiologically acceptable salt; in form of any of their structural isomers including mixtures thereof, preferably in pure enantiomeric or diastereomeric form or any mixture thereof including racemic mixtures. These compounds (lipoteicoic acids) defined directly above as well as those described by general formula III, IIIa, IIIb, or IIIc and their defined radicals below (as well as any lipoteichoic acid to be isolated from the Streptococcus sp. PT strain DSM 8747) are defined in this invention as "lipoteichoic acid of the invention" or "lipoteichoic acid used according to the invention".

In a further embodiment the invention relates to the use of a purified lipoteichoic acid isolatable from the Streptococcus sp. PT strain DSM 8747, preferably containing a beta-galactofuranosyl(1-3)glycerol-di-ester moiety, in the antibacterial treatment of a surface (or in other uses as described below in further related aspects of this invention).

In one preferred embodiment (referring to a lipoteichoic acid) the lipoteichoic acid used according to the invention is a compound according to any of general formulas III, IIIa, IIIb, or IIIc 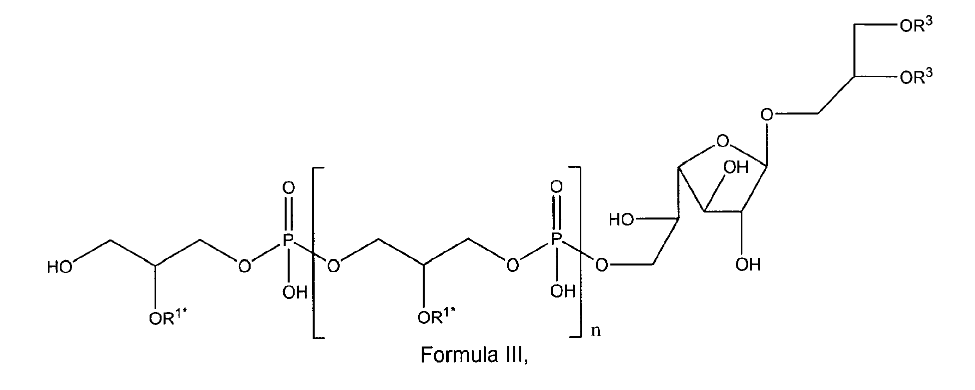 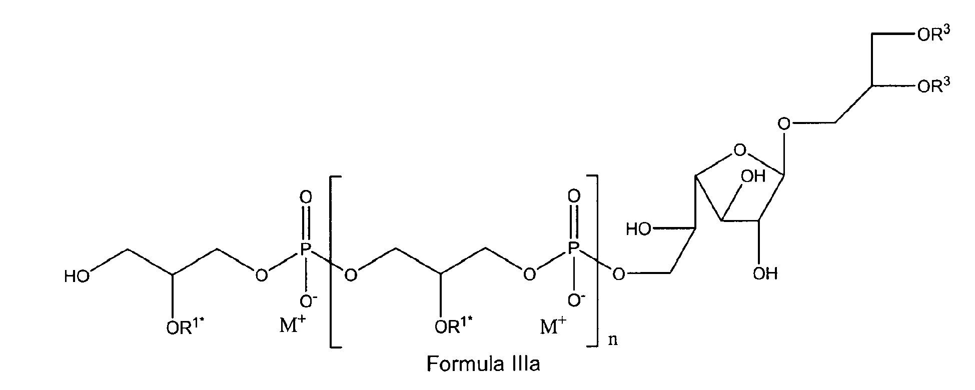 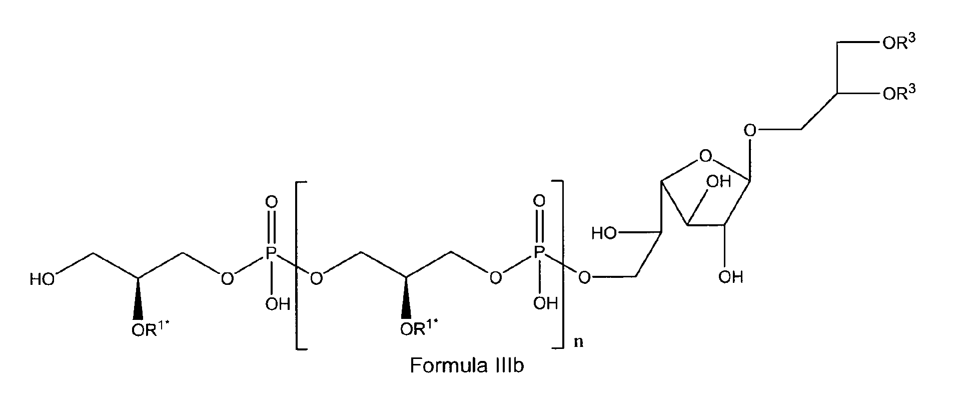 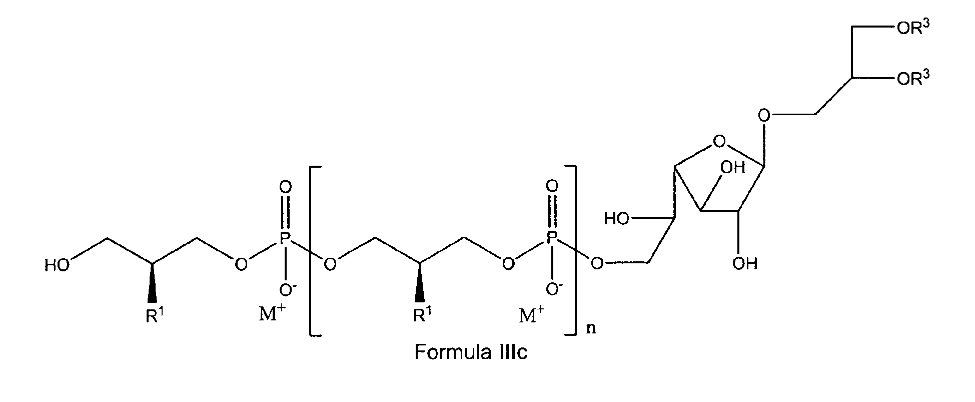 with
n having a mean value of 9, preferably being 6 to 12 while having a mean value of 9,
**R^{1*}** being either H or D-alanyl,
R³ being residues of saturated or unsaturated fatty acids with 12, 14, 16 or 18 carbon atoms, and
M⁺ being selected from positively charged ions, such as alkali metal ions or positively charged primary, secondary, tertiary or quaternary ammonium ions, preferably M⁺ being a sodium ion.

In one preferred embodiment (referring to a lipoteichoic acid) the lipoteichoic acid used according to the invention is a purified lipoteichoic acid (hereinafter called LTA-T) isolated from bacteria of the genus *streptococcus,* preferably from *streptococcus sp.,* most preferably from *streptococcus sp.* (DSM 8747).

Lipoteichoic acids - especially the lipoteichoic acid (LTA-T) - are described in the PCT-application WO 96/23896 together with its antitumor cholesterol-lowering activity and ways of isolating the LTA-T. The whole disclosure of W006/23896 is included in this application by way of reference.

In one further embodiment (referring to a lipoteichoic acid) the lipoteichoic acid used according to the invention being a compound according to general formula I-A is a lipoteichoic acid of *staphylococcus aureus* (below): 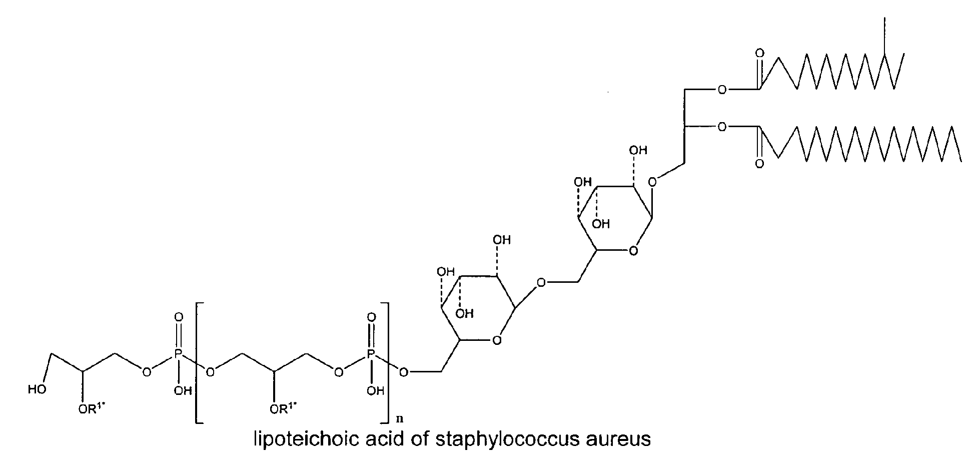 , wherein X is H or D-ala and the mean value of "n" is 16 to 40.

In a further preferred embodiment the glycerophosphate derivatives used according to the invention are glycerophosphate derivatives according to general formula I selected from 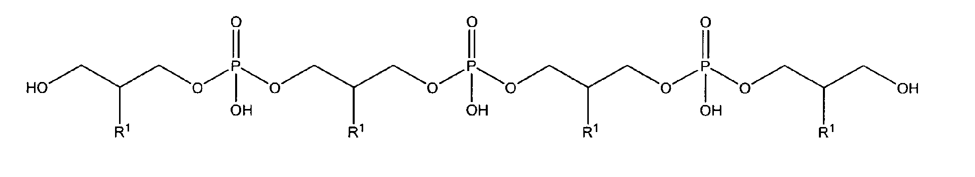 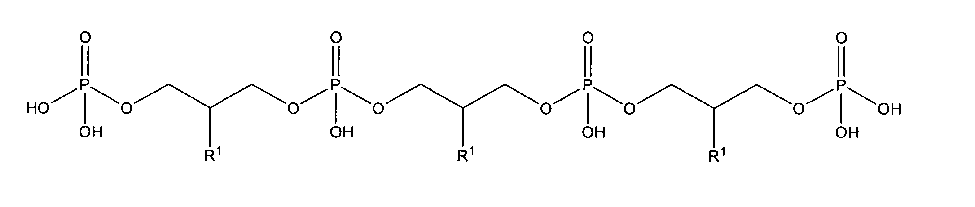 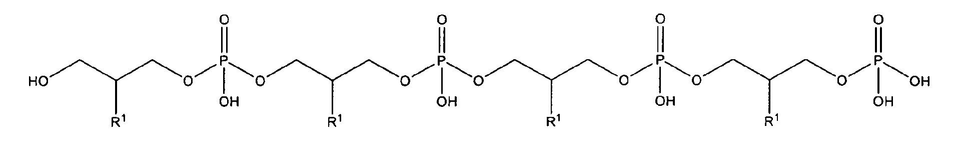 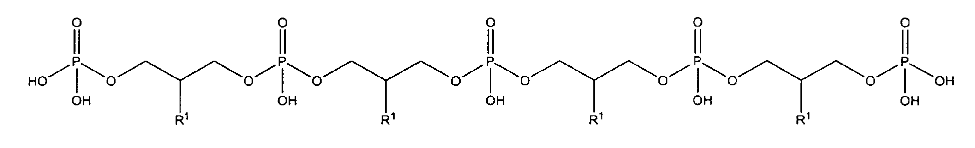 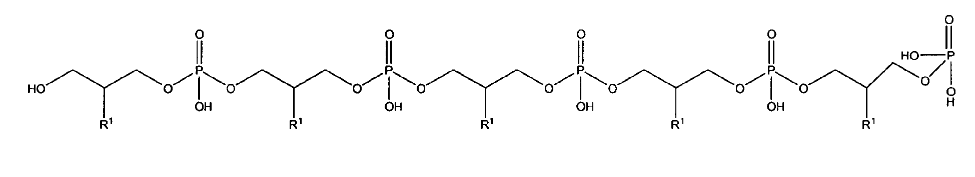 with R¹ being OH;
either in free form or as physiologically acceptable salt; in form of the racemate or as enantiomer;
or 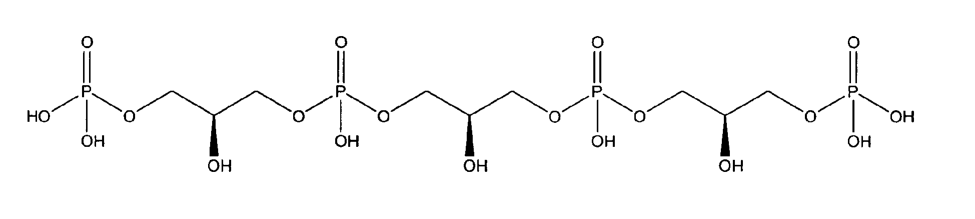 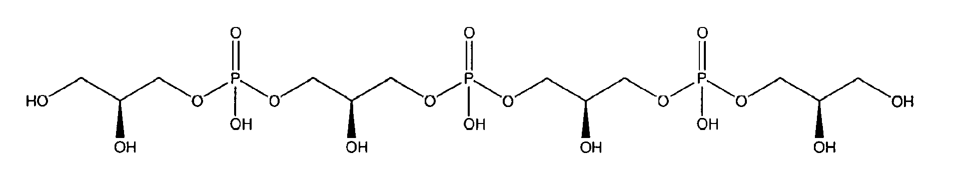 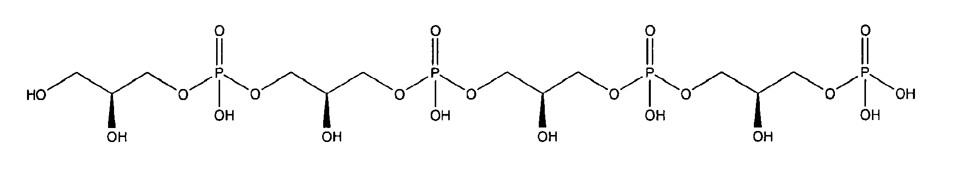 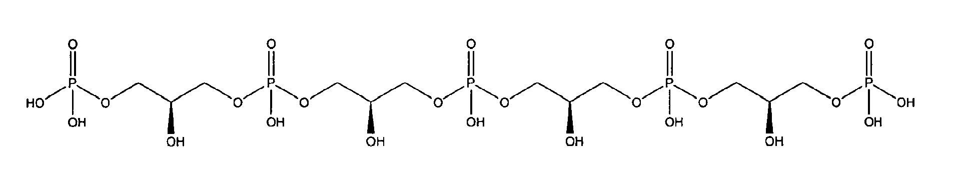 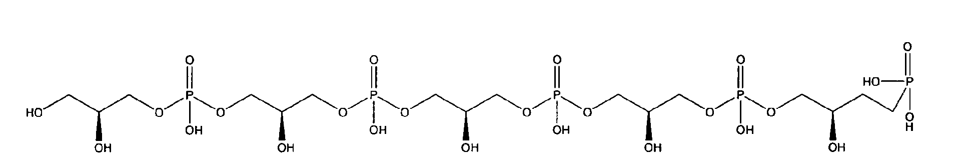 being present either in free form or as physiologically acceptable salt;
or to
a combination of 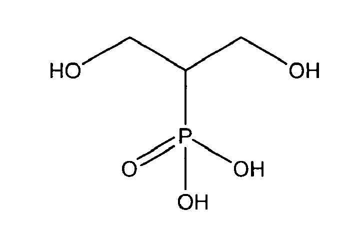 as a free acid or as a salt like a sodium (e.g. mono- or di-sodium salt) or calcium salt, and 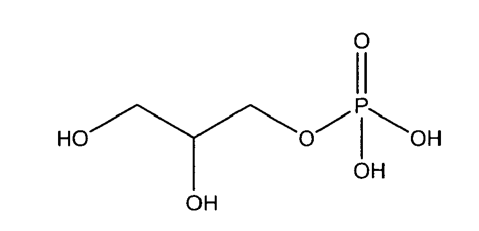 either as enantiomer or racemate or as a free acid or as a salt like a sodium (e.g. mono- or di-sodium salt) or calcium salt.

In a further preferred embodiment of the use of the glycerophosphate derivatives according to the invention
- the treatment is resulting in the glycerophosphate derivative blocking the adhesion of at least one species of bacteria to the surface, preferably is resulting in the glycerophosphate derivative blocking the adhesion of at least one species of gram-positive bacteria to the surface;
   and/or
- the treatment is resulting in the glycerophosphate derivative being adhered to the surface, preferably is resulting in the glycerophosphate derivative being non-covalently adhered to the surface.

"Adhesion" is defined herein as the physical adherence of a chemical compound - here a "glycerophosphate derivative of the invention" or a "glycerophosphate derivative used according to the invention" - or of a bacterium, (gram-positive) bacterium, to a surface.

"Blocking the adhesion" is defined herein as occupation (by the glycerophosphate derivative) of the same site of adherence as the bacterium that tries to adhere (achieve adhesion) either through already occupying this site or through exchange of the glycerolphosphate derivative with the bacterium through competitive inhibition and then occupation of the respective adhesion site.

"Being adhered to the surface" is defined herein as the physical adherence of a chemical compound or bacterium, (gram-positive) bacterium, to a surface.

"Bacterially challenged surface" is defined herein as a surface as defined here-above onto which (gram-positive) bacteria have, will or may adhere/d.

"Gram-positive bacteria" is defined herein as bacteria with cell walls. They are stained dark blue or violet by Gram staining, having a high amount of peptidoglycan in the cell wall. Gram-positive cell walls typically lack the outer membrane found in Gram-negative bacteria. Preferably the gram-positive bacteria are lactobacilli and streptococci.

"Species" is defined as a species of a bacterium.

In a further preferred embodiment of the use of the glycerophosphate derivatives according to the invention
- the surface is a bacterially challenged surface,
   and/or
- the surface is part of a medical device, preferably of a medical device being a device prepared to be brought into contact with the body of an animal or human, preferably of a medical device being a device prepared to be introduced by any artificial or natural body-opening into the body of an animal or human; more preferably of a medical device being a device being an at least temporarily fixed implant, or a continuously movable implant, most preferably is an artificial body implant like an artificial prosthesis, an electrically powered implant, a bio implants, a dental implants, an orthopedic implants, a Brain implant, a Breast implant, a Buttock implant, a Cochlear implant, a Contraceptive implant, a Dental implant, a Mini dental implant, an Extraocular implant, a Microchip implant, a Retinal implant, a Subdermal implant or a Transdermal implant, including an artificial prosthesis, like an artificial joint, or nails, pins, rods, plates and screws and also pacemakers, cochlear implants, stents or artificial heart-valves.

"Being non-covalently adhered to the surface" is defined herein as the physical adherence - excluding a covalent binding - of either a chemical substance or of a bacterium, (gram-positive) bacterium, to a surface.

A further related aspect of the invention is drawn to the use of a glycerophosphate derivative as defined above for blocking the adhesion of at least one species of bacteria to a surface, preferably a bacterially challenged surface; more preferably a surface challenged by gram-positive bacteria.

"Use for blocking the adhesion of at least one species of bacteria to a surface" is defined herein as use of an active chemical compound (in the context of this invention a "glycerophosphate derivative of the invention" or a "glycerophosphate derivative used according to the invention") which is acting by occupation of the adhesion site of at least one species of bacteria to a surface thus blocking the adhesion of this at least one species of (gram-positive) bacteria to the surface.

Another further related aspect of the invention is drawn to the use of a glycerophosphate derivative as defined above for the establishing of an antibacterial cover of a surface, preferably of a bacterially challenged surface; most preferably of a surface challenged by gram-positive bacteria.

"Cover" is defined herein as a layer of active chemical compounds (in the context of this invention "glycerophosphate derivatives of the invention" or "glycerophosphate derivatives used according to the invention") that covers a "surface" by adhesion to its binding sites on the surface.

"Establishing of an antibacterial cover of a surface" is defined herein as establishing (by applying the compounds) a layer of active chemical compounds (in the context of this invention "glycerophosphate derivatives of the invention" or "glycerophosphate derivatives used according to the invention") that covers a "surface" by adhesion to its binding sites on the surface. This layer of active chemical compounds (see definition of "cover" above) is acting in an antibacterial way as the compounds occupy the adhesion site of (at least one species) of bacteria to a surface thus blocking the adhesion of these (gram-positive) bacteria to the surface.

Another further related aspect of the invention is drawn to a bacterially challenged surface comprising a glycerophosphate derivative as defined above.

Another further related aspect of the invention is drawn to a preparation for the prevention of bacterial adhesion comprising a glycerophosphate derivative as defined above. In addition, such a preparation is preferred, wherein the glycerophosphate derivative according to general formula I is present in the preparation in an amount between 0.1 to 100 mg/ml, preferably 0.5 to 10 mg/ml, more preferably 0.7 to 7 mg/ml, most preferably 2 to 5 mg/ml. Especially preferred is also such a preparation, wherein the preparation has a pH ≥ 5.5, preferably a pH ≥ 7.0.

"Preparation for the prevention of bacterial adhesion" is defined herein as a chemical preparation, preferably a solution comprising at least one active chemical compound prepared for the prevention of bacterial adhesion by physically applying this active compound to e.g. a surface or (the surface of) a medical device. In the context of this invention the active chemical compound is a "glycerophosphate derivative of the invention" or a "glycerophosphate derivative used according to the invention", which is acting by blocking the adhesion of at least one species of (gram-positive) bacteria to a surface.

Another further related aspect of the invention is drawn to a medical device comprising a glycerophosphate derivative as defined above. Accordingly, this further related aspect of the invention is drawn to a medical device comprising a glycerophosphate derivative according to general formula 1; 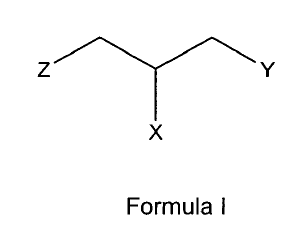 wherein
one of X and Y is R¹ while the other is 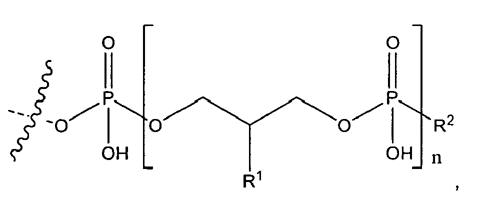 and Z is either OH or O-PO(OH)₂),
n is either 0, or 0 to 11;
and

if n is 0, R¹ and R² are OH and the glycerophosphate derivative is a sodium salt of the compound of either formula V-A or V-B 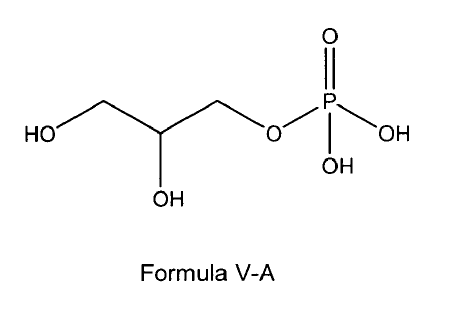 or 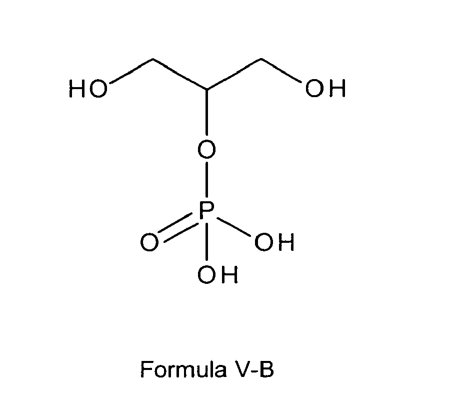 or if n is 0 to 11, R¹ is either H, OH or OMe or OEt and R² is OH or -O-CH₂-CH(R¹)-CH₂-OH and the glycerophosphate derivative is a compound of either formula I-A or I-C 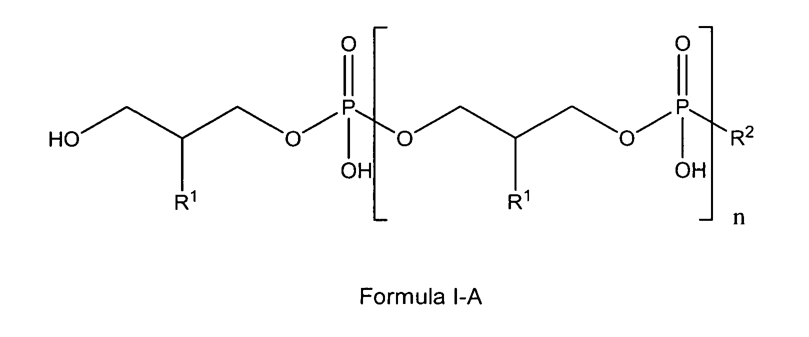 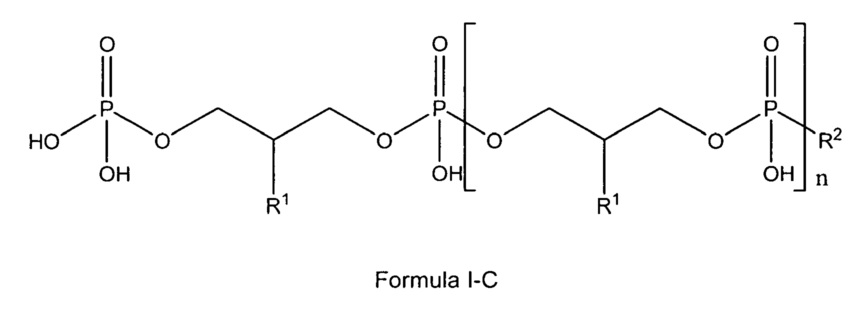 wherein
n is 0 to 11, preferably 1 to 11,
R¹ is either H, OH or OMe or OEt and
R² is OH or -O-CH₂-CH(R¹)-CH₂-OH;
with the compounds of formula I being present either in free form or as physiologically acceptable salt; being present in form of any of their structural isomers including mixtures thereof, preferably in pure enantiomeric or diastereomeric form or any mixture thereof including racemic mixtures.

Preferably, such a medical device is a device prepared to be brought into contact with the body of an animal or human, preferably is a device prepared to be introduced by any artificial or natural body-opening into the body of an animal or human; more preferably is a device being an at least temporarily fixed implant, or a continuously movable implant, most preferably is an artificial body implant like an electrically powered implant, a bio implants, a dental implants, an orthopedic implants, a Brain implant, a Breast implant, a Buttock implant, a Cochlear implant, a Contraceptive implant, a Dental implant, a Mini dental implant, an Extraocular implant, a Microchip implant, a Retinal implant, a Subdermal implant or a Transdermal implant, including an artificial prosthesis, like an artificial joint, or nails, pins, rods, plates and screws and also pacemakers, cochlear implants, stents or artificial heart-valves.

In general, for all further related aspects of the invention being disclosed above, the expression "a glycerophosphate derivative as defined above" is meaning all glycerophosphate derivatives that are disclosed or defined above. Thus, this expression is identical to and encompasses the "glycerophosphate derivatives of the invention" or the "glycerophosphate derivatives used according to the invention" that were already defined above. It thus also encompasses:
- the compound/s as described by general formula V-A, V-Aa, V-Ab, V-Ac or V-B or V-Ba and their defined radicals/derivatives being above defined as "glycerol phosphate/s of the invention" or "glycerol phosphate/s used according to the invention";
- the compound/s as described by general formula II, IIa, IIb, IIc, IId or IIe and their defined radicals/derivatives being above defined as "polyglycerol phosphate/s of the invention" or "polyglycerol phosphate/s used according to the invention";
- "Teichoic acids" being an inclusive term including the a) lipoteichoic acids (LTA) and b) the wall teichoic acids (WTA) forming a major part of the cell wall of gram-positive bacteria;
- the compound/s like those described by general formula III, IIIa, IIIb, or IIIc and their defined radicals/derivatives (as well as any lipoteichoic acid to be isolated from the Streptococcus sp. PT strain DSM 8747) being defined above as "lipoteichoic acid of the invention" or "lipoteichoic acid used according to the invention".

Particularly "a glycerophosphate derivative as defined above" also means a glycerophosphate derivative according to general formula I; 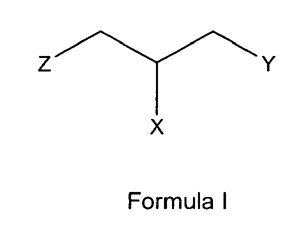 wherein
one of X and Y is R¹ while the other is 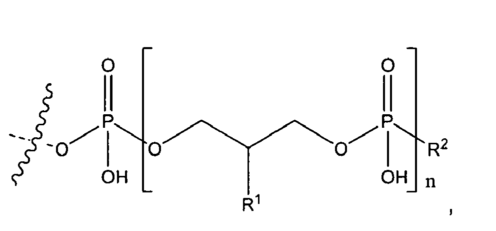 and Z is either OH or O-PO(OH)₂),
n is either 0, or 0 to 11;
and
if n is 0, R¹ and R² are OH and the glycerophosphate derivative is a sodium salt of the compound of either formula V-A or V-B 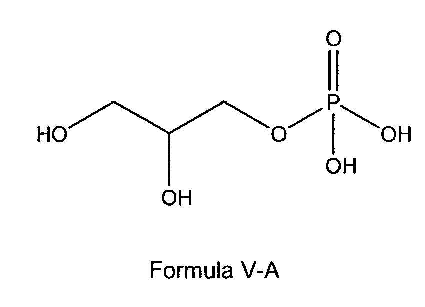 or 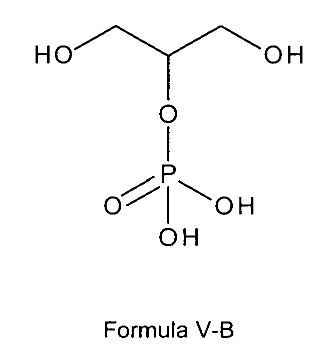 or if n is 0 to 11, R¹ is either H, OH or OMe or OEt and R² is OH or -O-CH₂-CH(R¹)-CH₂-OH and the glycerophosphate derivative is a compound of either formula I-A or I-C 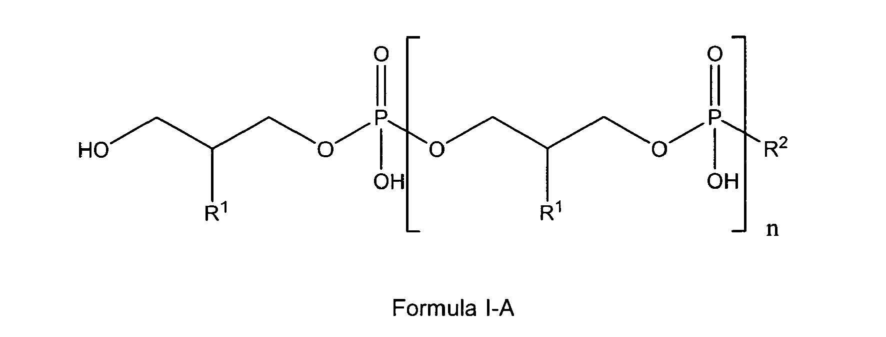 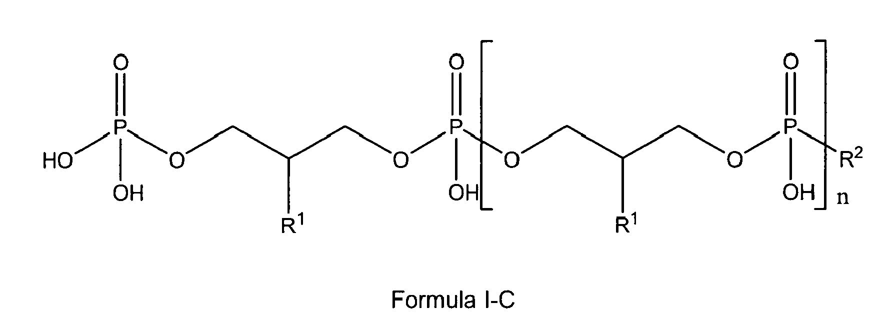 wherein
n is 0 to 11, preferably 1 to 11,
R¹ is either H, OH or OMe or OEt and
R² is OH or -O-CH₂CH(R¹)-CH₂-OH;
with the compounds of formula I being present either in free form or as physiologically acceptable salt; being present in form of any of their structural isomers including mixtures thereof, preferably in pure enantiomeric or diastereomeric form or any mixture thereof including racemic mixtures;
or
lipoteichoic acids and other glycerophosphate derivatives according to general formula I-A; 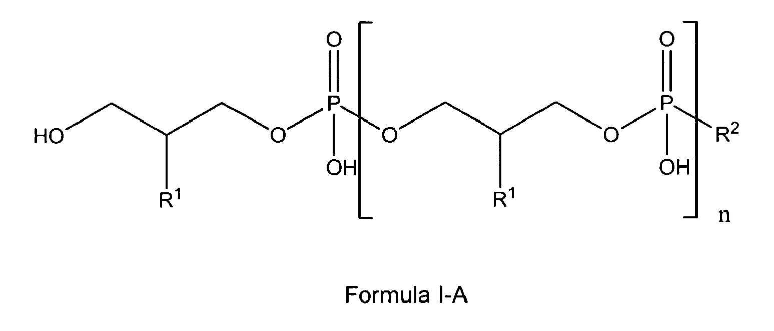 wherein
n is either 0, 1 to 11 or has a mean value of 9 (or a value of 8 to 40);
and
if n is 0, R¹ and R² are OH;
if n is 1 to 11, R¹ is either H, OH or OMe or OEt and R² is OH or -O-CH₂CH(R¹)-CH₂-OH;
if n has a (mean) value of 8 to 40, or a mean value of 9, R¹ is either OH or O-D-Alanyl and R² is
either 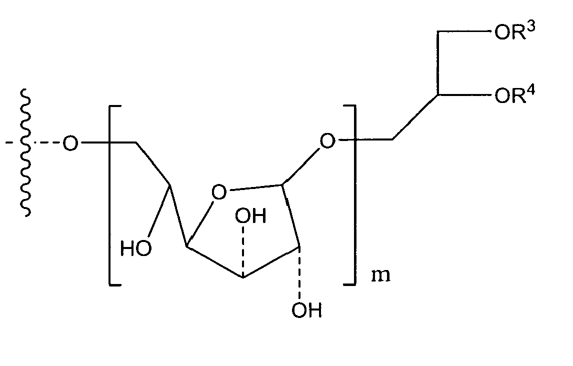 or its tautomeric equivalent 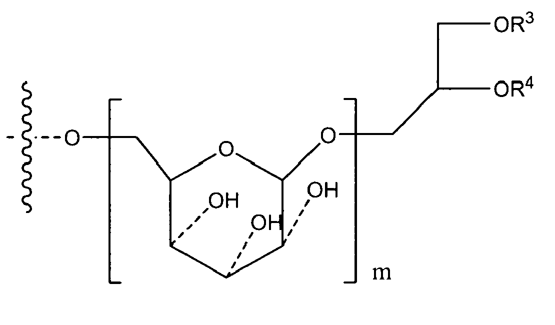 with R³ and R⁴ independently from one another being residues of saturated or unsaturated, unsubstituted fatty acids with 10 to 20 carbon atoms; and m being selected from 1 to 3,
with the compounds of formula I-A being present either in free form or as physiologically acceptable salt; in form of any of their structural isomers including mixtures thereof, preferably in pure enantiomeric or diastereomeric form or any mixture thereof including racemic mixtures;
and
any glycerophosphate derivative disclosed or described above that is directly or indirectly referring back or is falling under general formula I or general formula IA.

Without limitation the invention is further described by way of examples and figures below:

### Figures:

Fig. 1: Reaction Scheme for the synthesis of PGP1 according to the PhD-thesis of A. Stadelmaier (2003) at the University of Konstanz and the general synthetic principle is also described in Stadelmaier et al, "Synthesis of the First Fully Active Lipoteichoic Acid", Angew. Chem. International Edition (2003); 42 (8), p. 916-920.

## Claims

1. Use of a glycerophosphate derivative according to general formula I; 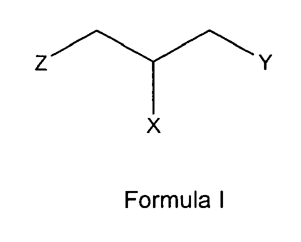 wherein
one of X and Y is R¹ while the other is 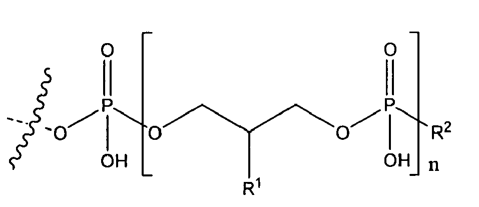 and Z is either OH or O-PO(OH)₂,
n is either 0, 0 to 11 or has a mean value of 9 (or a value of 8 to 40);
and
if n is 0, R¹ and R² are OH;
if n is 0 to 11, X is R¹, R¹ is either H, OH or OMe or OEt and R² is OH or -O-CH₂-CH(R¹)-CH₂-OH;
if n has a (mean) value of 8 to 40, or a mean value of 9, R¹ is either OH or O-D-Alanyl and R² is
either 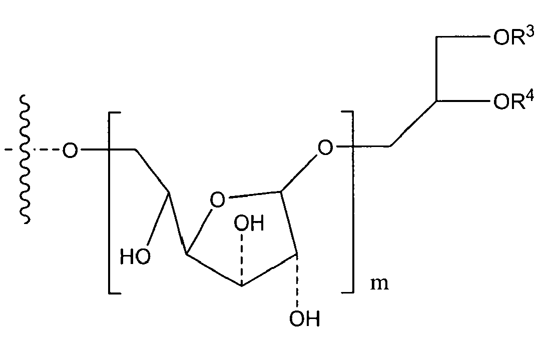 or its tautomeric equivalent 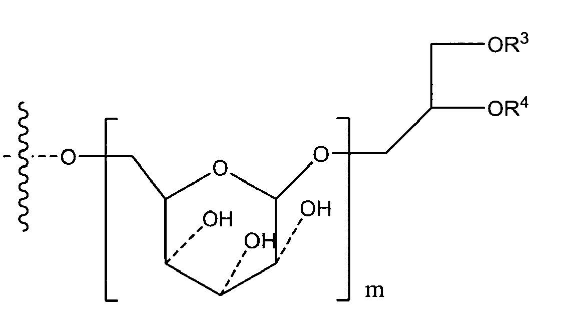 with R³ and R⁴ independently from one another being residues of saturated or unsaturated, unsubstituted fatty acids with 10 to 20 carbon atoms; and m being selected from 1 to 3,
with the glycerophosphate derivative of formula I being present either in free form or as physiologically acceptable salt; in form of any of their structural isomers including mixtures thereof, preferably in pure enantiomeric or diastereomeric form or any mixture thereof including racemic mixtures;
in the antibacterial treatment of a surface.

2. Use according to claim 1 **characterized in that** the glycerophosphate derivative is a compound of Formula I-A

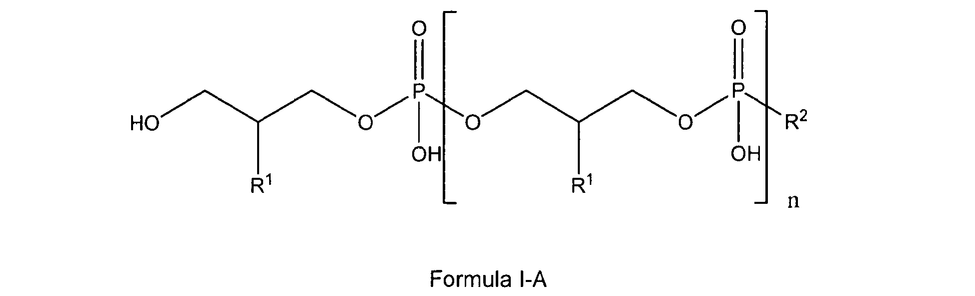

3. Use according to claim 1 **characterized in that** the glycerophosphate derivative is a compound of Formula I-B

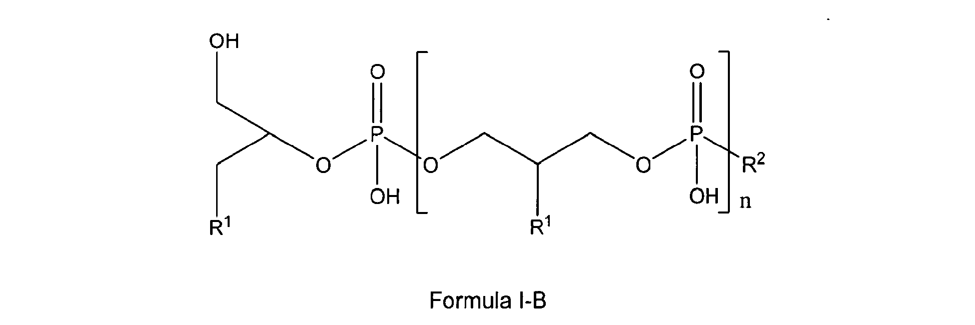

4. Use according to claim 1 **characterized in that** the glycerophosphate derivative is a compound of Formula I-C

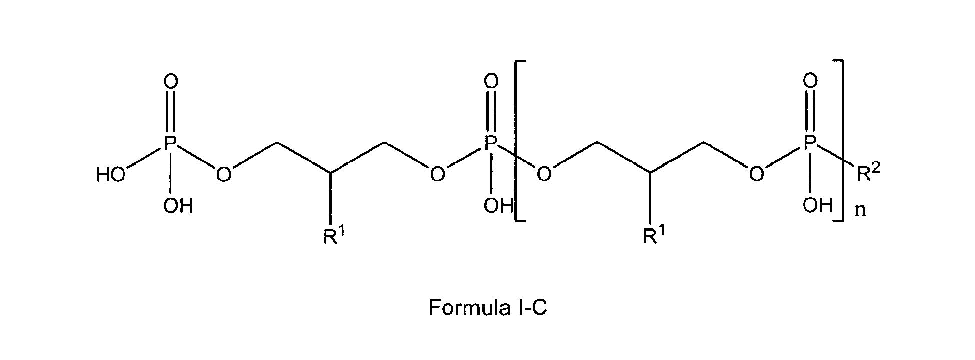

5. Use according to claim 1, wherein in the glycerophosphate derivative of formula I, n is 0, Z is OH and R¹ and R² are OH thus being a glycerophosphate according to one of the following formulas V-A or V-B: 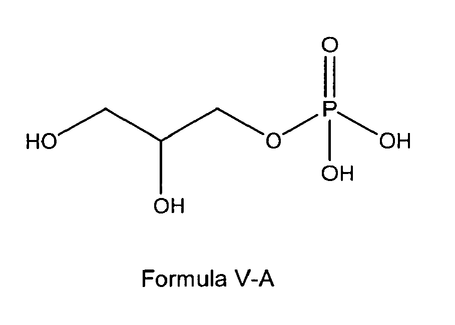 or

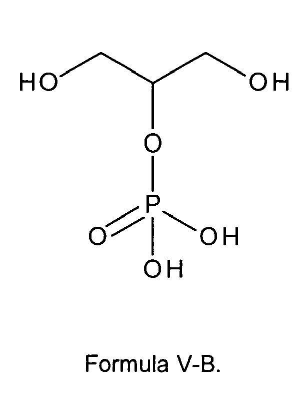

6. Use according to claim 5, wherein the glycerophosphate derivative is a compound of formula I or I-A is a glycerol phosphate according to any of the following formulas V-A, V-Aa, V-Ab or V-Ac: 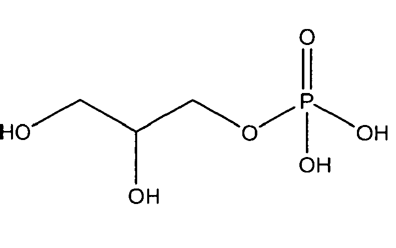 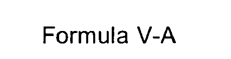 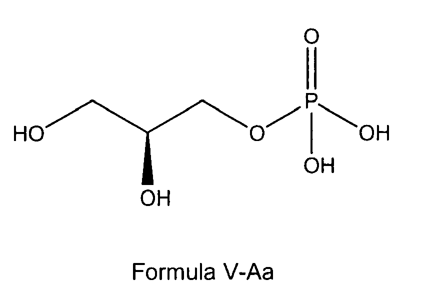 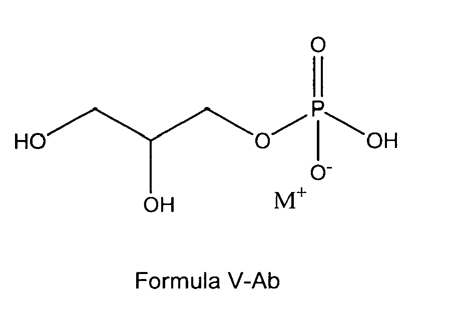 or 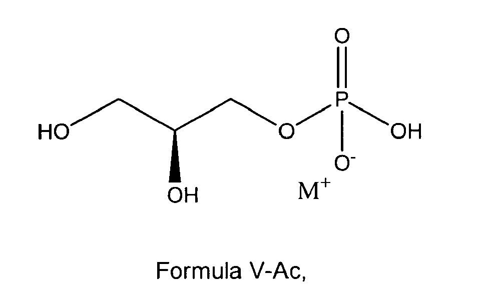 wherein M⁺ is selected from positively charged ions, such as alkali metal ions, earth alkali metal ions or positively charged primary, secondary, tertiary or quaternary ammonium ions, or M⁺ is a sodium ion or two sodium ions; preferably wherein the compound according to any of the following formulas V-A, V-Aa, V-Ab or V-Ac is selected from free glycerol phosphate, sodium glycerol phosphate, potassium glycerol phosphate or magnesium glycerol phosphate,
most preferably is sodium glycerol phosphate of formula V-Ab or V-Ac.

7. Use according to claim 5, wherein the glycerophosphate derivative is a compound of formula I or I-B is a glycerol phosphate according to any of the following formulas V-B, or V-Ba: 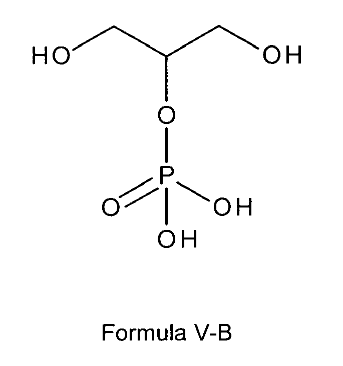 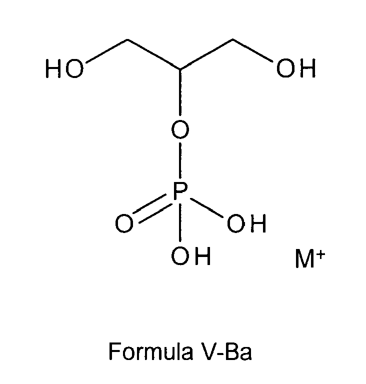 wherein M⁺ is selected from positively charged ions, such as alkali metal ions, earth alkali metal ions or positively charged primary, secondary, tertiary or quaternary ammonium ions, or M⁺ is a sodium ion or two sodium ions;
preferably wherein the compound according to any of the following formulas V-B, or V-Ba is selected from free glycerol phosphate, sodium glycerol phosphate, potassium glycerol phosphate or magnesium glycerol phosphate,
most preferably is sodium glycerol phosphate of formula V-Ba;
or
wherein the glycerol-phosphate derivative according to claim 5 is a glycerol phosphate being part of a combination of 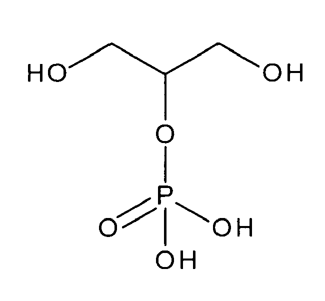 as a free acid or as a salt like a sodium or calcium salt,
and 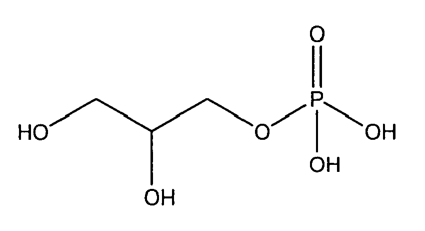 either as enantiomer or racemate or as a free acid or as a salt like a sodium or calcium salt.

8. Use according to claim 1 wherein in the glycerophosphate derivative of Formula I with Z being either OH or being O-PO(OH)₂, and n being 0 to 10, X is R¹, R¹ is either H, OH or OMe or OEt and R² is OH or -O-CH₂-CH(R¹)-CH₂-OH, thus being is a polyglycerol phosphate according to general formula I-A or I-C; 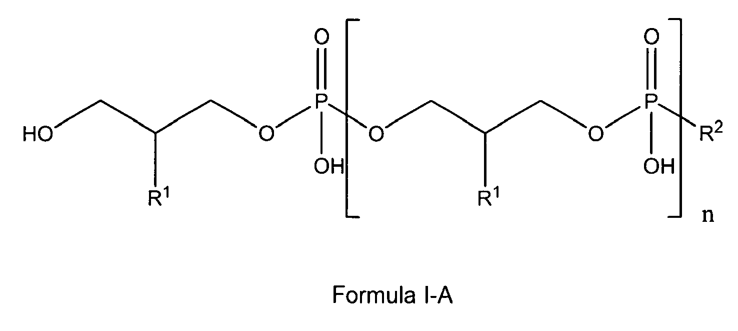 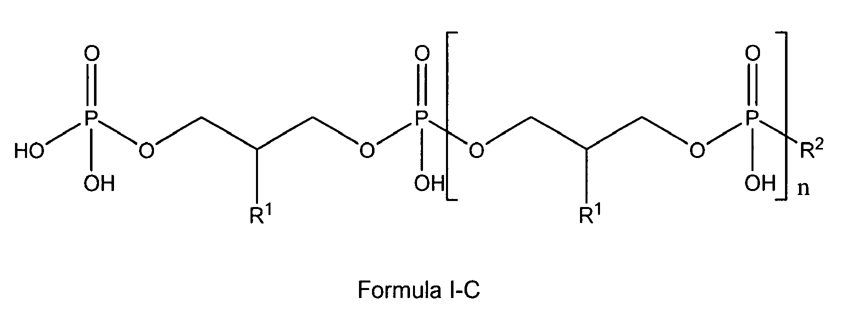 wherein
n is 0 to 11, preferably 1 to 11,
R¹ is either H, OH or OMe or OEt and
R² is OH or -O-CH₂-CH(R¹)-CH₂-OH;
with the compound of formula I, I-A or I-C being present either in free form or as physiologically acceptable salt; in form of any of their structural isomers including mixtures thereof, preferably in pure enantiomeric or diastereomeric form or any mixture thereof including racemic mixtures;
preferably with the compound of formula I, I-A or I-C being a compound according to any of general formulas II-A, II-A', II-B, II-B', II-C or II-C' 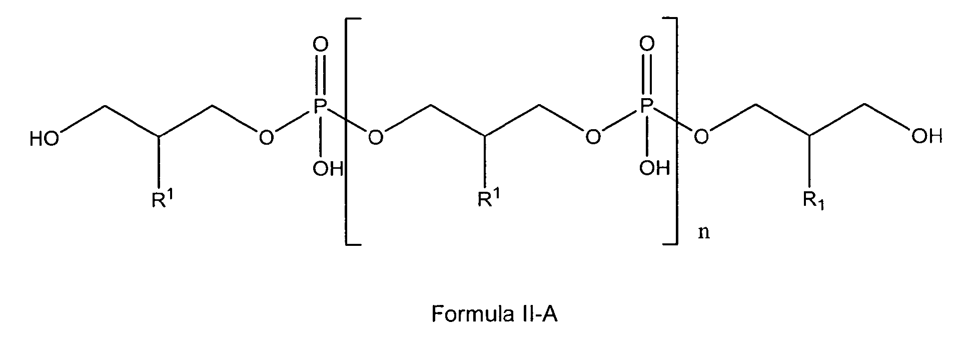 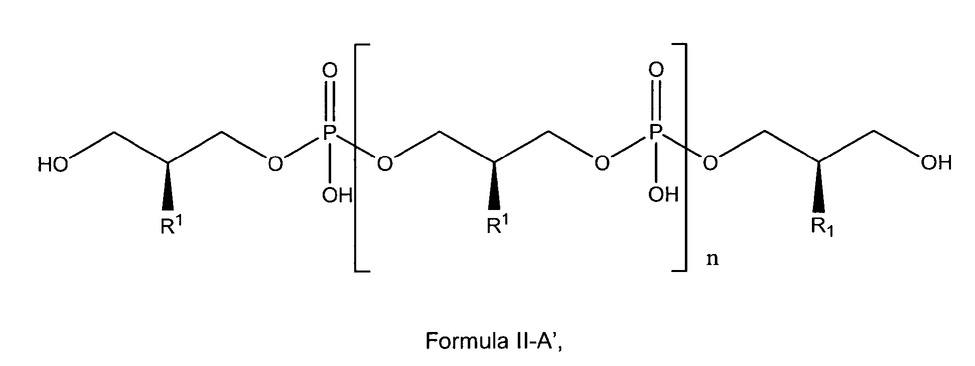 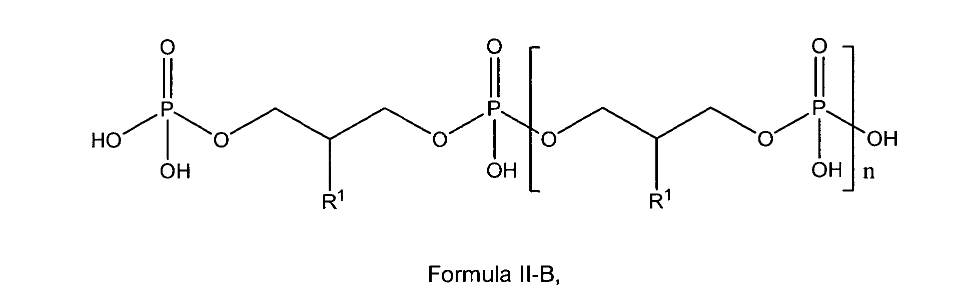 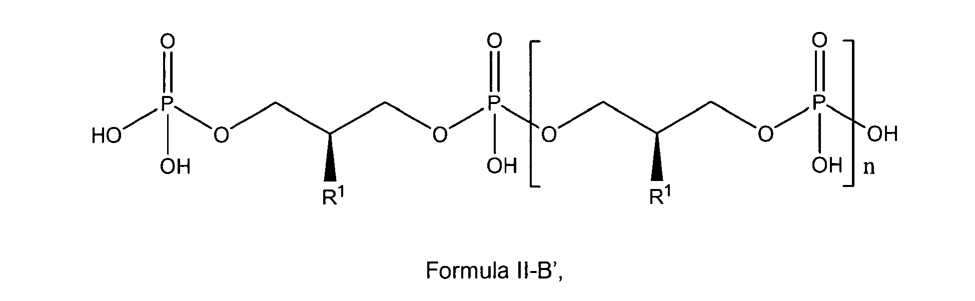 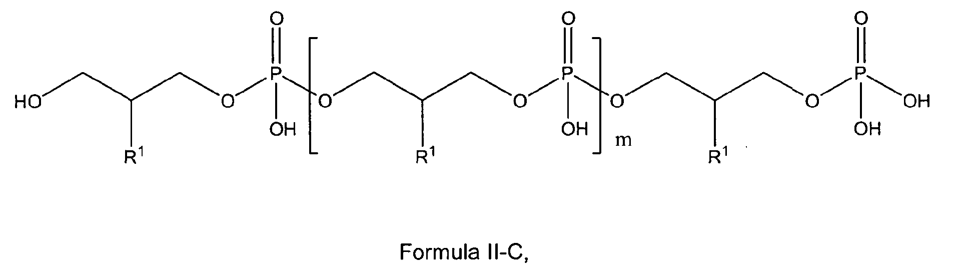 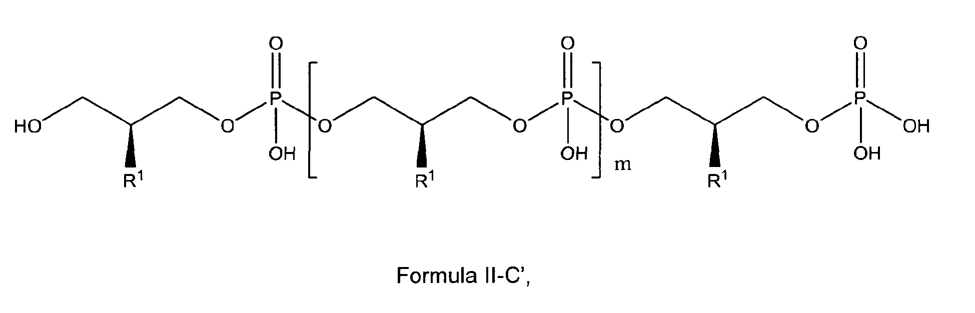 wherein
n is 0 to 10, or n is 1 to 10;
m is 0 to 9;
R¹ is either H, OH or OMe or OEt, or R¹ is OH;
with the compound of formula I, I-A or I-C being present either in free form or as physiologically acceptable salt such as salts with an alkali metal, earth alkali metal or positively charged primary, secondary, tertiary or quaternary ammonium ions, preferably a sodium salt.

9. Use according to claim 8 wherein the polyglycerol phosphate is a compound according to general formula II-A' 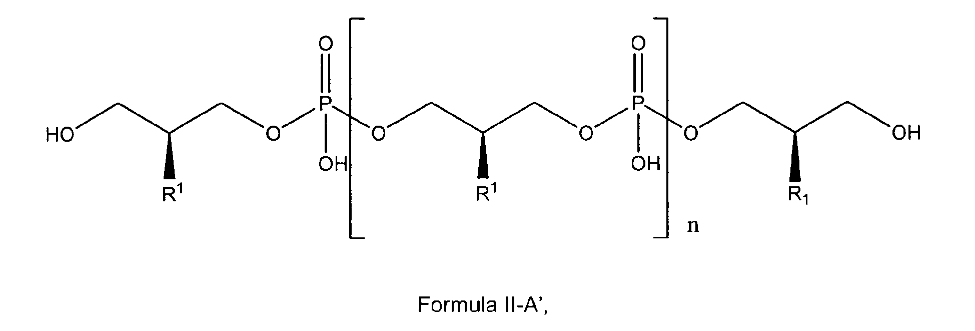 wherein
n is 3; and
R¹ is OH;
either in free form or as physiologically acceptable salt;
or 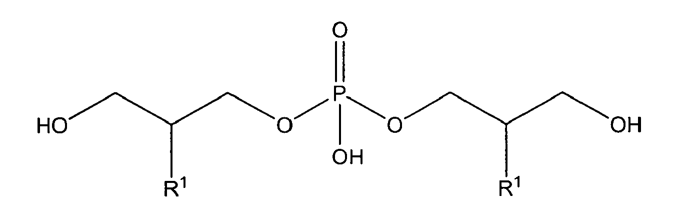 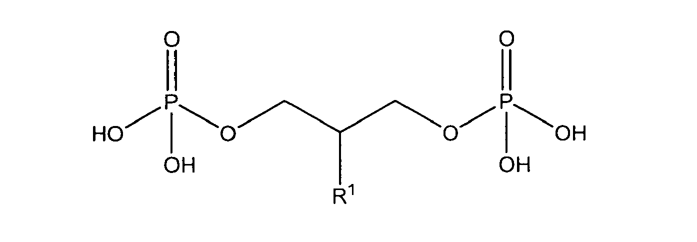 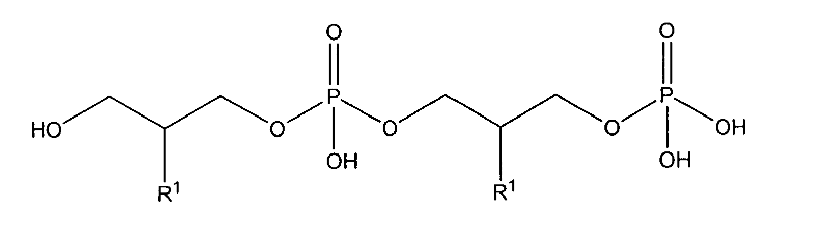 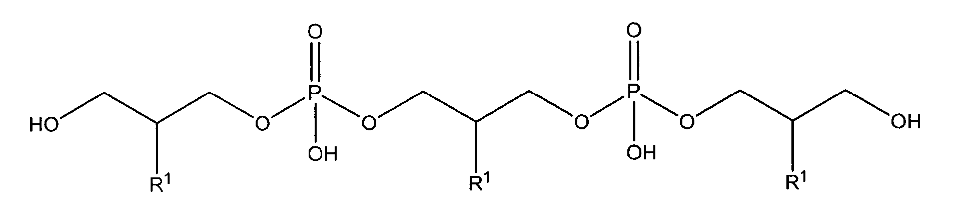 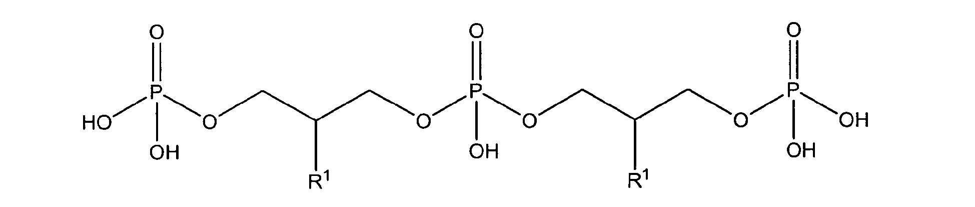 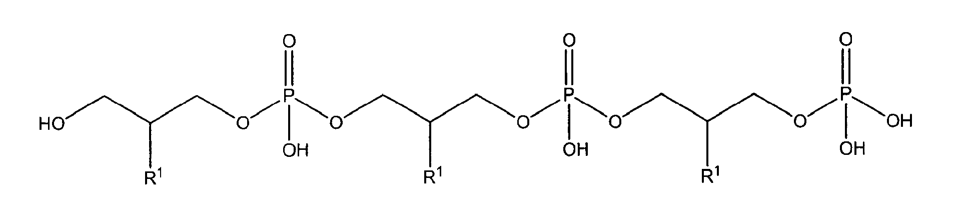 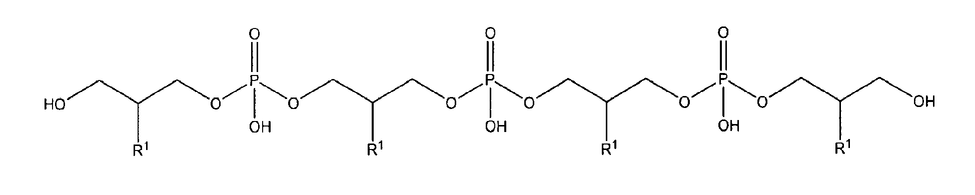 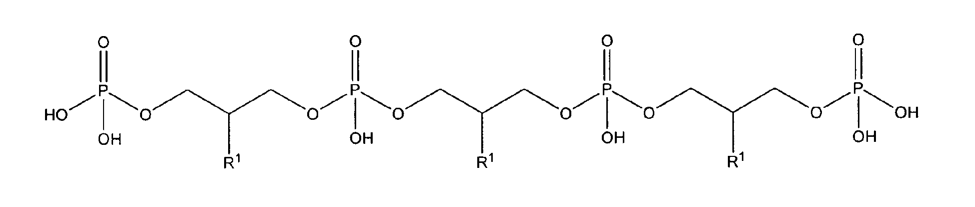 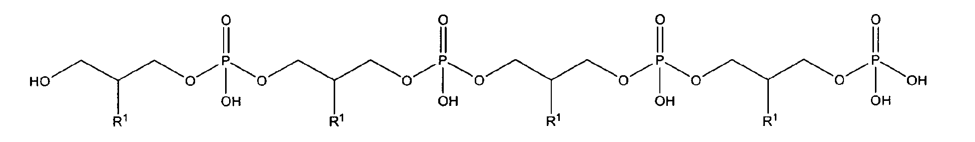 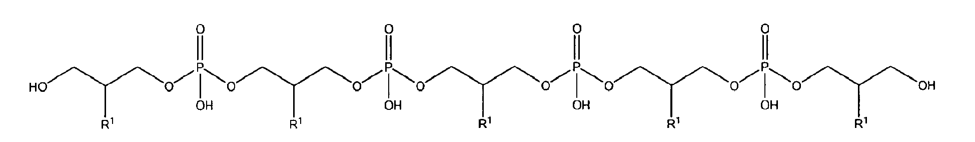 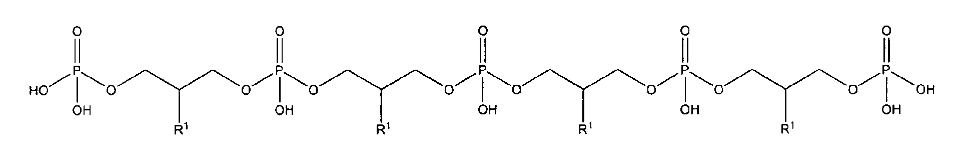 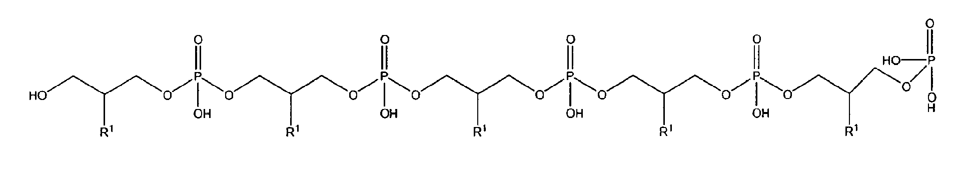 with R¹ being OH
either in free form or as physiologically acceptable salt; in form of the racemate or as enantiomer;
or one of 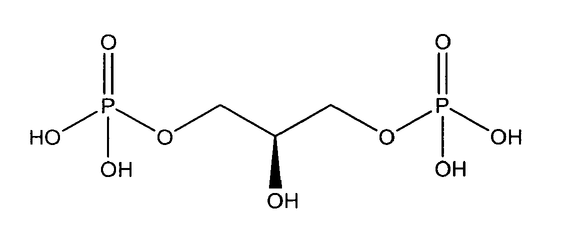 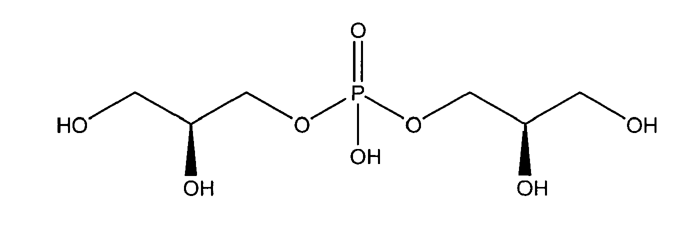 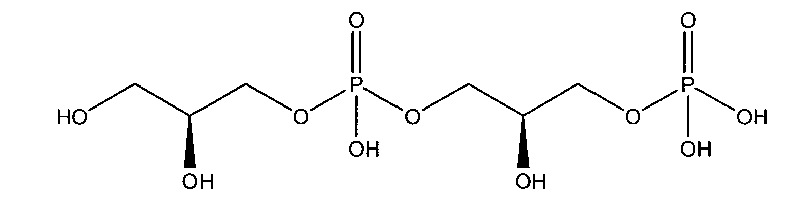 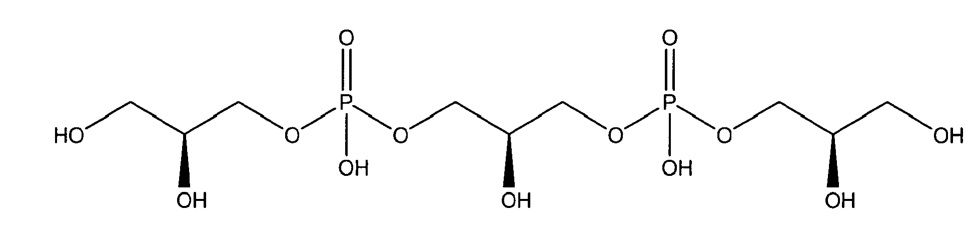 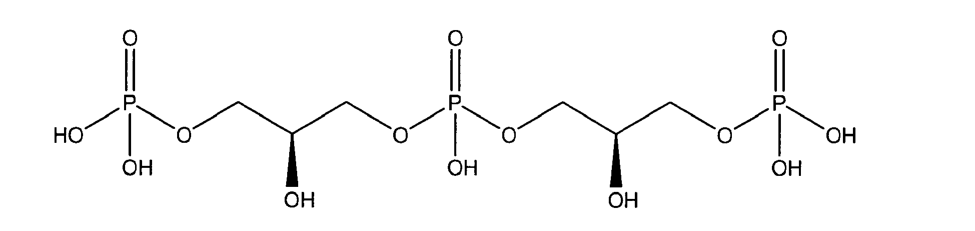 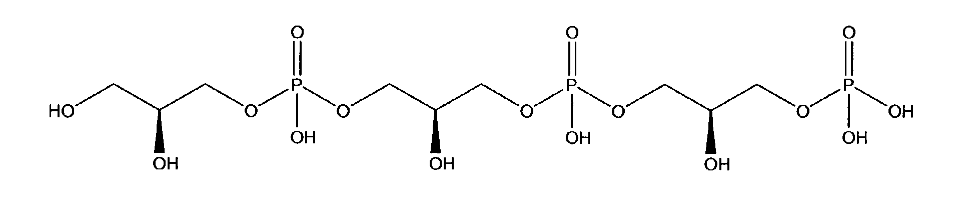 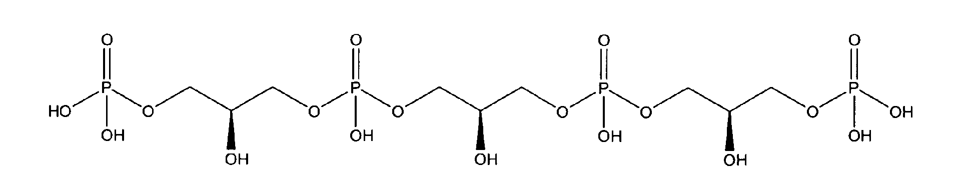 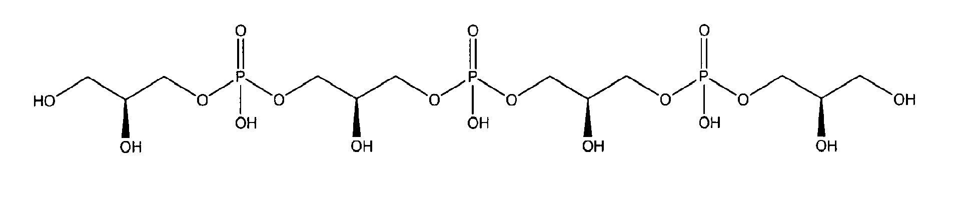 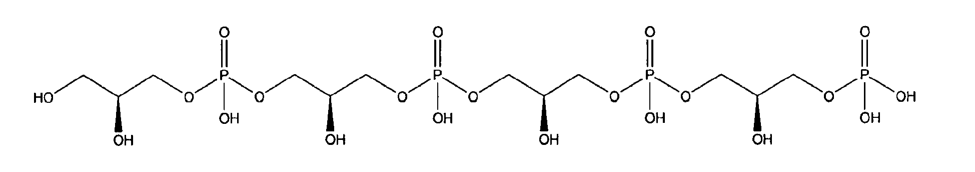 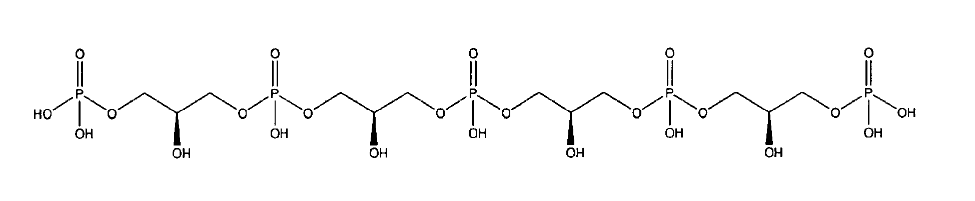 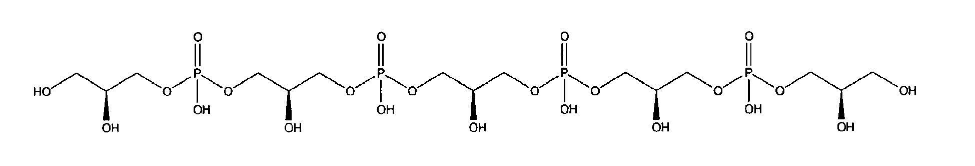 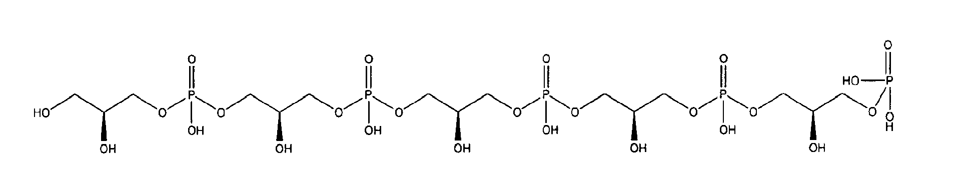 being present either in free form or as physiologically acceptable salt .

10. Use according to claim 8 wherein the glycerophosphate derivative is selected from 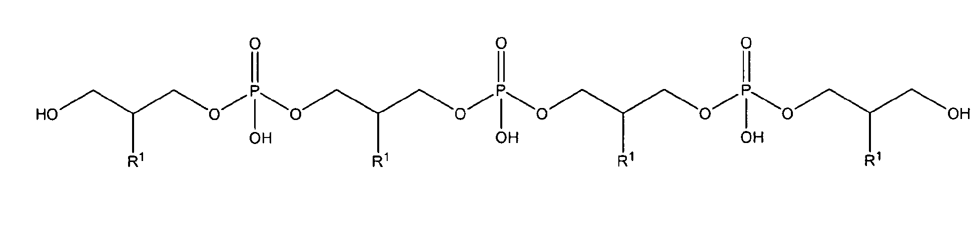 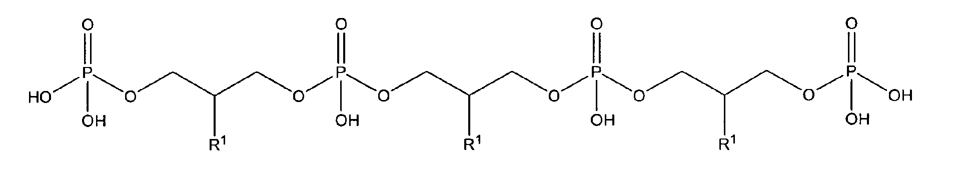 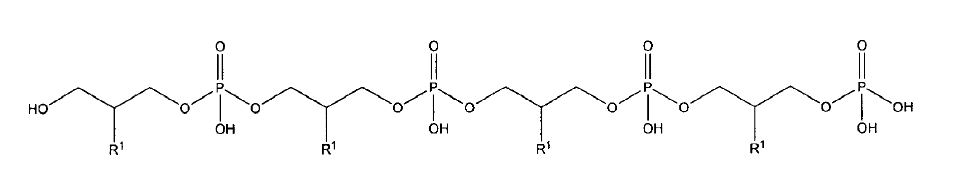 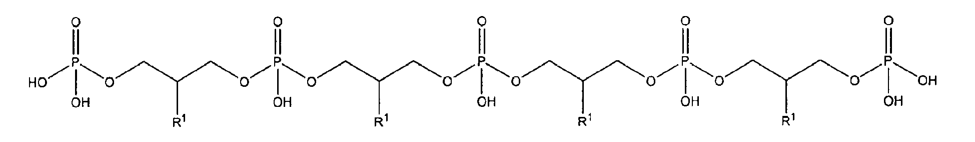 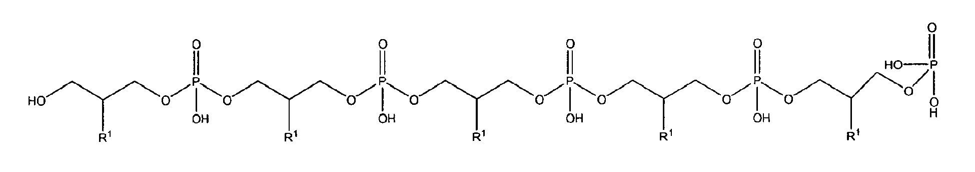 with R¹ being OH;
either in free form or as physiologically acceptable salt; in form of the racemate or as enantiomer;
or 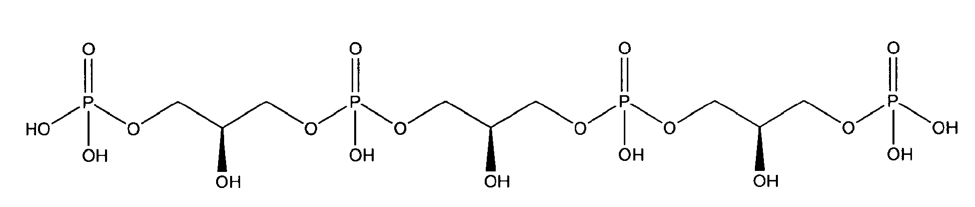 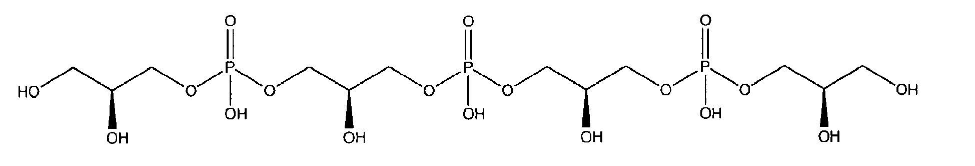 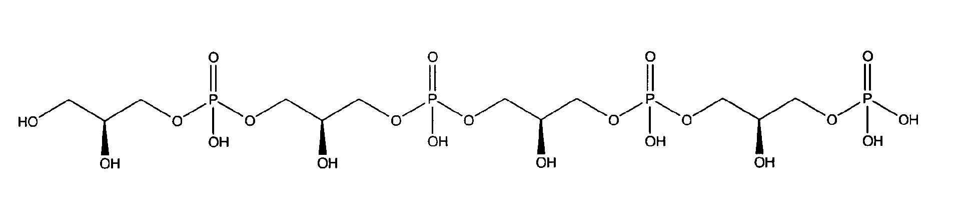 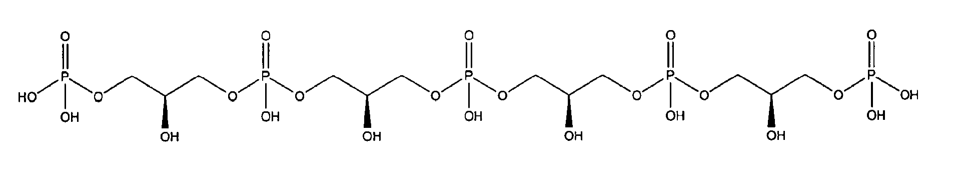 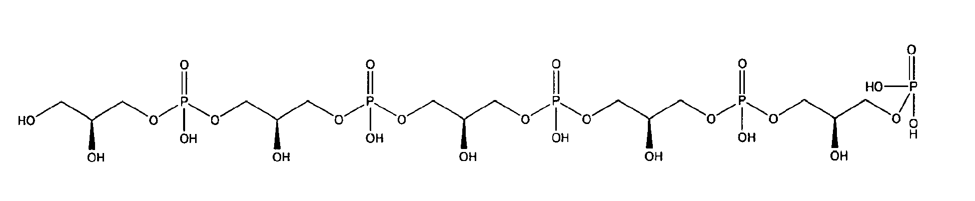 being present either in free form or as physiologically acceptable salt;
or in which the glycerophosphate derivative is part of a combination of 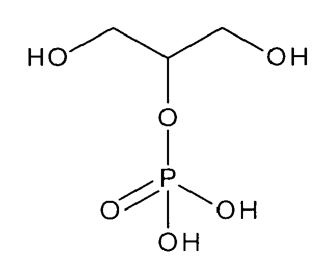 as a free acid or as a salt like a sodium or calcium salt, and 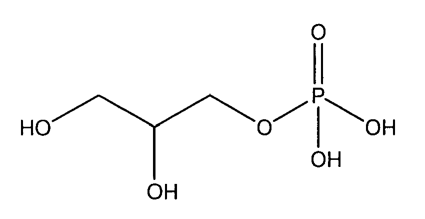 either as enantiomer or racemate or as a free acid or as a salt like a sodium or calcium salt.

11. Use according to any of claims 1 to 10, wherein the treatment is resulting in the glycerophosphate derivative blocking the adhesion of at least one species of bacteria to the surface, preferably is resulting in the glycerophosphate derivative blocking the adhesion of at least one species of gram-positive bacteria to the surface;
and/or,
wherein the treatment is resulting in the glycerophosphate derivative being adhered to the surface, preferably is resulting in the glycerophosphate derivative being non-covalently adhered to the surface.

12. Use according to any of claims 1 to 11, wherein the surface is a bacterially challenged surface,
and/or
wherein the surface is part of a medical device, preferably of a medical device being a device prepared to be brought into contact with the body of an animal or human, preferably of a medical device being a device prepared to be introduced by any artificial or natural body-opening into the body of an animal or human; more preferably of a medical device being a device being an at least temporarily fixed implant, or a continuously movable implant, most preferably is an artificial body implant like an artificial prosthesis, an electrically powered implant, a bio implants, a dental implants, an orthopedic implants, a Brain implant, a Breast implant, a Buttock implant, a Cochlear implant, a Contraceptive implant, a Dental implant, a Mini dental implant, an Extraocular implant, a Microchip implant, a Retinal implant, a Subdermal implant or a Transdermal implant, including an artificial prosthesis, like an artificial joint, or nails, pins, rods, plates and screws and also pacemakers, cochlear implants, stents or artificial heart-valves.

13. A preparation for the prevention of bacterial adhesion comprising a glycerophosphate derivative as defined in any of claims 1 to 10.

14. A medical device comprising a glycerophosphate derivative as defined in claim 1 according to general formula 1; 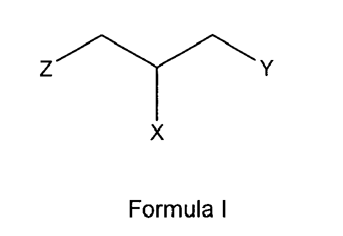 wherein
one of X and Y is R¹ while the other is 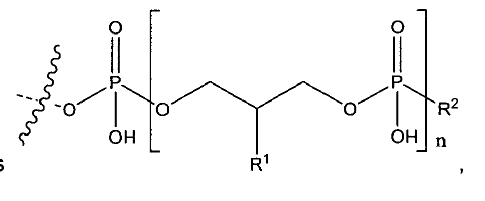 and Z is either OH or O-PO(OH)₂),
n is either 0, or 0 to 11;
and
if n is 0, R¹ and R² are OH and the glycerophosphate derivative is a sodium salt of the compound of either formula V-A or V-B according to claim 5 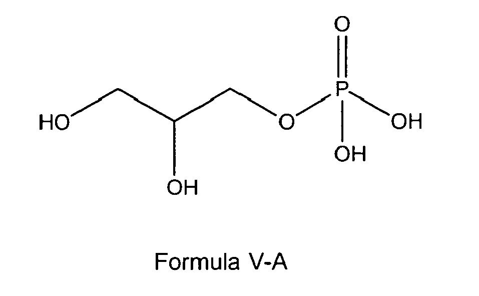 or 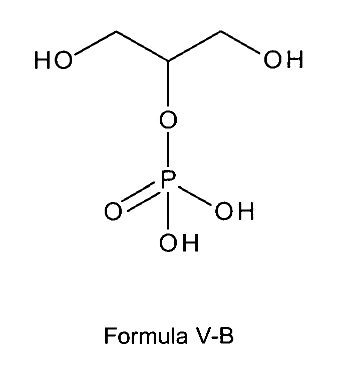 or if n is 0 to 11, R¹ is either H, OH or OMe or OEt and R² is OH or -O-CH₂-CH(R¹)-CH₂-OH and the glycerophosphate derivative is a compound of either formula I-A or I-C according to claim 8 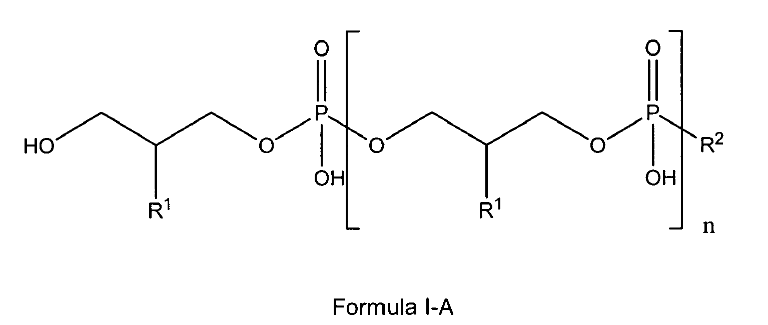 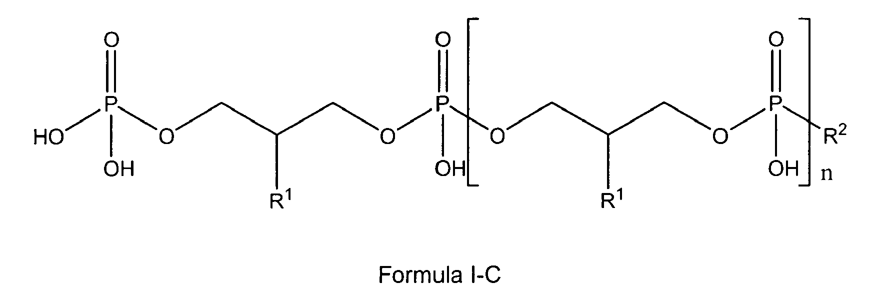 wherein
n is 0 to 11, preferably 1 to 11,
R¹ is either H, OH or OMe or OEt and
R² is OH or -O-CH₂-CH(R¹)-CH₂-OH;
with the compounds of formula I being present either in free form or as physiologically acceptable salt; being present in form of any of their structural isomers including mixtures thereof, preferably in pure enantiomeric or diastereomeric form or any mixture thereof including racemic mixtures.

15. The medical device according to claim 14, **characterized in that** the medical device is a device prepared to be brought into contact with the body of an animal or human, preferably is a device prepared to be introduced by any artificial or natural body-opening into the body of an animal or human; more preferably is a device being an at least temporarily fixed implant, or a continuously movable implant, most preferably is an artificial body implant like an electrically powered implant, a bio implants, a dental implants, an orthopedic implants, a Brain implant, a Breast implant, a Buttock implant, a Cochlear implant, a Contraceptive implant, a Dental implant, a Mini dental implant, an Extraocular implant, a Microchip implant, a Retinal implant, a Subdermal implant or a Transdermal implant, including an artificial prosthesis, like an artificial joint, or nails, pins, rods, plates and screws and also pacemakers, cochlear implants, stents or artificial heart-valves.
